(19) Europäisches Patentamt
European Patent Office
Office européen des brevets

(11) EP 2 778 185 A2

(12) # EUROPEAN PATENT APPLICATION

(43) Date of publication:
**17.09.2014 Bulletin 2014/38**

(51) Int Cl.:
***C08G 59/06*** *(2006.01)* ***C08G 59/24*** *(2006.01)*

(21) Application number: **14156548.1**

(22) Date of filing: **25.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.03.2013 US 201361776879 P**

(71) Applicant: **Dow Global Technologies LLC**
**Midland, MI 48674 (US)**

(72) Inventors:
- **Drumright, Ray E.**
  **Midland, MI Michigan 48640 (US)**
- **Guo, Yinzhong**
  **Midland, MI Michigan 48642 (US)**
- **Hefner, Jr., Robert E.**
  **Rosharon, TX Texas 77583 (US)**
- **Tang, Houxiang**
  **Midland, MI Michigan 48642 (US)**

(74) Representative: **Buckley, Guy Julian**
**Patent Outsourcing Limited**
**1 King Street**
**Bakewell**
**Derbyshire DE45 1DZ (GB)**

(54) **Epoxy resin compositions, methods of making same, and articles thereof**

(57) Advanced epoxy resins comprising the reaction product of an epoxy resin comprising a diglycidyl ether of Formula 1 as defined herein, and at least on difunctional compound selected from an aromatic diol and a dicarboxylic acid are described. The diglycidyl ether contains a cycloaliphatic ring of 3-5 carbon atoms. Purified diglycidyl ether is used to obtain substantially linear, high molecular weight, advanced epoxy resin. Curable compositions, cured compositions, and articles comprising the advanced epoxy resins are also disclosed. The advanced epoxy resins provide cured coatings having improved flexibility and low total chlorine content.

EP 2 778 185 A2

**Description**

BACKGROUND OF THE INVENTION

The disclosure generally relates to epoxy resin compositions, methods of making same, and articles thereof.

Epoxy resins are well-known polymers with diverse applications such as metal can coatings, general industrial metal and marine protective coatings, automotive primers, printed circuit boards, semiconductor encapsulants, adhesives, and aerospace composites. High molecular weight epoxy resins based on bisphenol A are widely used in the coatings industry. High molecular weight epoxy resins can be cured by reaction of curing agents with the terminal epoxy groups and the multiple secondary hydroxyl groups along the backbone to provide good mechanical properties and performance. However, the bisphenol A based high molecular weight epoxy resins have limited flexibility and toughness at room temperature. The flexibility deficiency is an issue in certain applications, for example in flexible coatings and can coatings, and can lead to cracking and delamination of the cured coating upon coating deformation. Moreover, some epoxy resins are produced by a Lewis acid catalyzed process, which can result in high levels of chloride, including ionic and hydrolysable chloride, in the epoxy resin. The presence of chloride precludes the use of an epoxy resin for many applications including electronics and coatings used in contact with food, for example can coatings. High chloride levels in epoxy resin coatings can also contribute to corrosion of metal substrates.

The epoxy resins used in many applications are advanced bisphenol A resins. Some improvement in flexibility and toughness can be realized when cycloaliphatic diglycidyl ethers replace bisphenol A diglycidyl ethers in the advancement reaction. The synthesis of advanced epoxy resins of high molecular weight requires diglycidyl ethers of high purity. Cycloaliphatic diglycidyl ethers of high purity are not readily available. The preparation of cycloaliphatic diglycidyl ethers of high purity is problematic because of the multiple reaction pathways available when cycloaliphatic diols are reacted with epichlorohydrin. When advancement reactions are attempted with cycloaliphatic diglycidyl ethers of low purity, premature gelation can occur due to crosslinking reactions, which renders the product useless.

It is therefore desirable to prepare and use cycloaliphatic epoxy resins of high purity to prepare advanced cycloaliphatic resins. It is also desirable to have an epoxy resin which affords a tough, flexible coating upon curing, and which has a low total chlorine content.

BRIEF SUMMARY OF THE INVENTION

The need for a substantially linear high molecular weight cycloaliphatic epoxy resin which affords cured coatings having improved flexibility and low total chlorine content is met by an advanced epoxy resin comprising the reaction product of: an epoxy resin comprising a diglycidyl ether of Formula 1

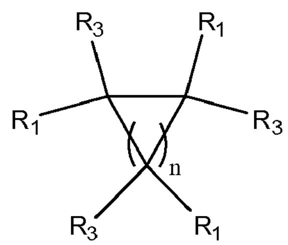

1

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the diglycidyl ether has two glycidyl ether groups; and at least one difunctional compound selected from an aromatic diol and a dicarboxylic acid.

Another embodiment is a method of making an advanced epoxy resin comprising reacting the epoxy resin comprising the diglycidyl ether of Formula 1 with at least one difunctional compound selected from an aromatic diol and a dicarboxylic acid.

Another embodiment is a curable advanced epoxy resin composition comprising the advanced epoxy resin, a curing agent, and optionally a curing catalyst.

Another embodiment is a method of curing a curable advanced epoxy resin composition comprising reacting the advanced epoxy resin with a curing agent, and optionally a curing catalyst.

Another embodiment is a cured advanced epoxy resin composition comprising a reaction product of the advanced epoxy resin and a curing agent.

Another embodiment is an article comprising the cured advanced epoxy resin, wherein the article is a coating, an adhesive, an electrical or structural laminate, an electrical or structural composite, a filament winding, a molding, a

casting, a potting, or an encapsulation.

These and other embodiments are described in detail below.

DETAILED DESCRIPTION OF THE INVENTION

The inventors have discovered advanced epoxy resins that provide cured coatings having improved flexibility and reduced total chloride levels. High molecular weight epoxy resins, i.e. those having an epoxide equivalent weight greater than 500, are desirable. The molecular weight of low molecular weight diglycidyl ethers can be increased by chain extension with difunctional compounds, which serve as chain extenders, to form substantially linear high molecular weight epoxy resins. For example, the difunctional compound can be an aromatic diol or a dicarboxylic acid. The chain extension process is also known as "advancement", and the chain extended diglycidyl ether is referred to herein as an "advanced epoxy resin". Purified diglycidyl ether is used to obtain substantially linear, high molecular weight, advanced epoxy resin.

The advanced epoxy resins disclosed herein provide cured coatings having improved flexibility. The coatings are resistant to cracking and delamination upon deformation, and are thus ideally suited for flexible coatings and can coatings. The advanced epoxy resins also have low total chloride content, and are therefore suitable for electronics applications and for coatings used in contact with food, for example can coatings. Moreover the advanced epoxy resins also do not promote corrosion of metal substrates.

The terms "a" and "an" do not denote a limitation of quantity, but rather the presence of at least one of the referenced item. The term "or" means "and/or." The open-ended transitional phrase "comprising" encompasses the intermediate transitional phrase "consisting essentially of" and the close-ended phrase "consisting of." Claims reciting one of these three transitional phrases, or with an alternate transitional phrase such as "containing" or "including" can be written with any other transitional phrase unless clearly precluded by the context or art. Recitation of ranges of values are merely intended to serve as a shorthand method of referring individually to each separate value falling within the range, unless otherwise indicated herein, and each separate value is incorporated into the specification as if it were individually recited herein. The endpoints of all ranges are included within the range and are independently combinable.

"Combination" is inclusive of blends, mixtures, alloys, reaction products, and the like. The terms "first," "second," and the like, herein do not denote any order, quantity, or importance, but rather are used to denote one element from another. The suffix "(s)" as used herein is intended to include both the singular and the plural of the term that it modifies, thereby including one or more of that term (e.g., the film(s) includes one or more films). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements can be combined in any suitable manner in the various embodiments.

Compounds are described herein using standard nomenclature and chemical structure diagrams. For example, any position not substituted by any indicated group is understood to have its valency filled by indicated bonds, and/or a hydrogen atom(s). The term "alkyl" as used herein refers to straight chain and branched aliphatic hydrocarbon groups having the specified number of carbon atoms. Examples of alkyl include, but are not limited to, methyl, ethyl, n-propyl, i-propyl, n-butyl, s-butyl, t-butyl, n-pentyl, s-pentyl, n- and s-hexyl, n-and s-heptyl, and, n- and s-octyl. The term "cycloalkyl" as used herein refers to a cycloaliphatic group, optionally comprising straight chain or branched aliphatic substituent(s), and having the specified number of carbon atoms. The term "aryl" as used herein refers to an aromatic group, optionally comprising straight or branched chain aliphatic substituent(s), and having the specified number of carbon atoms. The term "hydrocarbyl" as used herein refers to any aliphatic, cycloaliphatic, aromatic, aryl substituted aliphatic or cycloaliphatic, or aliphatic or cycloaliphatic substituted aromatic groups. The aliphatic and cycloaliphatic groups can be saturated or unsaturated. The term "hydrocarbyloxy" refers to a hydrocarbyl group having an oxygen linkage between it and the carbon atom to which it is attached.

As used herein, the term "thermoset" refers to a polymer that can solidify or "set" irreversibly when heated. The terms "curable" and "thermosettable" are synonyms and mean the composition is capable of being converted to a cured or thermoset state or condition. The term "cured" or "thermoset" is defined by L. R. Whittington in Whittington's Dictionary of Plastics (1968) on page 239 as follows: "Resin or plastics compounds which in their final state as finished articles are substantially infusible and insoluble. Thermosetting resins are often liquid at some stage in their manufacture or processing, and are cured by heat, catalysis, or some other chemical means." After being fully cured, thermosets do not flow appreciably, and cannot be substantially reshaped by application of heat. The term "B-stage" as used herein refers to a thermoset resin that has been partially cured so that the product still has full to partial solubility in a solvent such as an alcohol or a ketone.

The advanced epoxy resin comprises the reaction product of: an epoxy resin comprising a diglycidyl ether of Formula 1

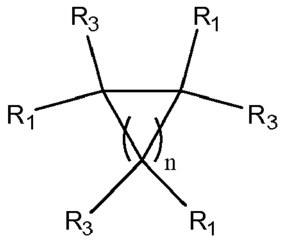

1

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the diglycidyl ether has two glycidyl ether groups; and at least one difunctional aromatic compound selected from an aromatic diol and a dicarboxylic acid.

The diglycidyl ether comprises one or more of a cyclopropane ring, a cyclobutane ring, and a cyclopentane ring, corresponding to n = 1, 2 and 3, respectively, in Formula 1. Each glycidyl ether group independently has the Formula 2

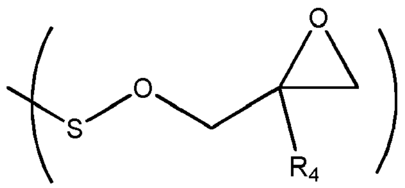

2

wherein $R_4$ is hydrogen or $C_{1-4}$ alkyl, and S is a direct bond, $C_{1-12}$ alkylene, or $C_{6-24}$ arylene.

Examples of the diglycidyl ether are cyclobutane-1,3-diglycidyl ether, cyclobutane-1,2-diglycidyl ether, mono-$C_{1-4}$ alkyl-cyclobutane-1,3-diglycidyl ethers, mono-$C_{1-4}$ alkyl-cyclobutane-1,2-diglycidyl ethers, di-$C_{1-4}$ alkyl-cyclobutane-1,3-diglycidyl ethers, di-$C_{1-4}$ alkyl-cyclobutane-1,2-diglycidyl ethers, tri-$C_{1-4}$ alkyl-cyclobutane-1,3-diglycidyl ethers, tetra-$C_{1-4}$ alkyl-cyclobutane diglycidyl ethers, cyclopropane-1,2-diglycidyl ether, mono-$C_{1-4}$ alkyl-cyclopropane-1,2-diglycidyl ethers, di-$C_{1-4}$ alkyl-cyclopropane-1,2-diglycidyl ethers, cyclopentane-1,2-diglycidyl ether, cyclopentane-1,3-diglycidyl ether, mono-$C_{1-4}$ alkyl-cyclopentane-1,2-diglycidyl ethers, mono-$C_{1-4}$ alkyl-cyclopentane-1,3-diglycidyl ethers, di-$C_{1-4}$ alkyl-cyclopentane-1,2-diglycidyl ethers, di-$C_{1-4}$ alkyl-cyclopentane-1,3-diglycidyl ethers, tri-$C_{1-4}$ alkyl-cyclopentane-1,2-diglycidyl ethers, tri-$C_{1-4}$ alkyl-cyclopentane-1,3-diglycidyl ethers, tetra-$C_{1-4}$ alkyl-cyclopentane-1,2-diglycidyl ethers, tetra-$C_{1-4}$ alkyl-cyclopentane-1,3-diglycidyl ethers, penta-$C_{1-4}$ alkyl-cyclopentane-1,2-diglycidyl ethers, penta-$C_{1-4}$ alkyl-cyclopentane-1,3-diglycidyl ethers, hexa-$C_{1-4}$ alkyl-cyclopentane-1,2-diglycidyl ethers, hexa-$C_{1-4}$ alkyl-cyclopentane-1,3-diglycidyl ethers, and a combination comprising one or more of the foregoing. In some embodiments, the diglycidyl ether comprises cis- and trans-2,2,4,4-tetramethylcyclobutane-1,3-diglycidyl ether.

The diglycidyl ether can have a purity of greater than or equal to 50 area %, specifically greater than or equal to 70 area %, more specifically greater than or equal to 85 area %, more specifically greater than or equal to 90 area %, more specifically greater than or equal to 95 area %, still more specifically greater than or equal to 98 area %, yet more specifically greater than or equal 99 area %, and even more specifically greater than or equal to 99.5 area %, based on total peak area for the epoxy resin as determined by gas chromatography. For the preparation of advanced epoxy resins, it is desirable for the diglycidyl ether to have a purity of greater than or equal to 90 area %, more specifically greater than or equal to 95 area %, still more specifically greater than or equal to 98 area %, yet more specifically greater than or equal 99 area %, and even more specifically greater than or equal to 99.5 area %, based on total peak area for the epoxy resin as determined by gas chromatography. Without being bound by theory, the use of lower purity diglycidyl ether in the advancement reaction can cause crosslinking and gelation, due to the presence of oligomers. The target purity can be achieved by the purification methods described below. The impurities in the diglycidyl ether can comprise a monoglycidyl ether of Formula 1 wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, hydroxyl, $C_{1-12}$ hydroxyalkyl, $C_{6-24}$ hydroxyaryl, or a glycidyl ether group, with the proviso that the monoglycidyl ether has one glycidyl ether group and one hydroxyl, $C_{1-12}$ hydroxyalkyl, or $C_{6-24}$ hydroxyaryl group. The impurities in the diglycidyl ether can also comprise oligomeric epoxy resins, hereinafter referred to as "oligomer(s)", and other minor components.

The diglycidyl ether can be formed by an aqueous epoxidation process. In particular, the epoxy resin can be formed by reacting a diol and an epihalohydrin in the presence of one or more basic acting substance, water, and optionally, one or more catalysts and/or organic solvents. A method of making the diglycidyl ether comprises the steps of: (a) forming a reaction mixture comprising a diol of Formula 3

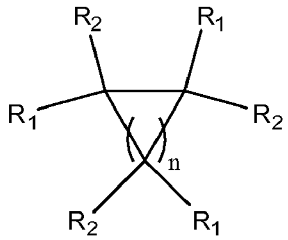

3

wherein n and $R_1$ are as defined above, and each $R_2$ is independently hydrogen, $C_{1-12}$ alkyl, hydroxyl, $C_{1-12}$ hydroxyalkyl, or $C_{6-24}$ hydroxyaryl, with the proviso that the diol has two hydroxyl, $C_{1-12}$ hydroxyalkyl, or $C_{6-24}$ hydroxyaryl groups; an epihalohydrin; a phase transfer catalyst; and optionally an organic solvent; (b) contacting a basic acting substance and water with the mixture of step (a); (c) washing the mixture of step (b) with an aqueous solvent to substantially remove salts to form the epoxy resin comprising a diglycidyl ether of Formula 1,

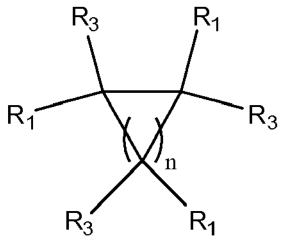

1

wherein n, $R_1$, and $R_3$ are as defined above, with the proviso that the diglycidyl ether has two glycidyl ether groups; and (d) isolating the diglycidyl ether from the reaction mixture. All of the above-described variations in the diglycidyl ether apply as well to the method of making the diglycidyl ether.

Examples of the diol are cyclobutane-1,3-diol, cyclobutane-1,2-diol, mono-$C_{1-4}$ alkyl-cyclobutane-1,3-diols, mono-$C_{1-4}$ alkyl-cyclobutane-1,2-diols, di-$C_{1-4}$ alkyl-cyclobutane-1,3-diols, di-$C_{1-4}$ alkyl-cyclobutane-1,2-diols, tri-$C_{1-4}$ alkyl-cyclobutane-1,3-diols, tetra-$C_{1-4}$ alkyl-cyclobutane diols, cyclopropane-1,2-diol, mono-$C_{1-4}$ alkyl-cyclopropane-1,2-diols, di-$C_{1-4}$ alkyl-cyclopropane-1,2-diols, cyclopentane-1,2-diol, cyclopentane-1,3-diol, mono-$C_{1-4}$ alkyl-cyclopentane-1,2-diols, mono-$C_{1-4}$ alkyl-cyclopentane-1,3-diols, di-$C_{1-4}$ alkyl-cyclopentane-1,2-diols, di-$C_{1-4}$ alkyl-cyclopentane-1,3-diols, tri-$C_{1-4}$ alkyl-cyclopentane-1,2-diols, tri-$C_{1-4}$ alkyl-cyclopentane-1,3-diols, tetra-$C_{1-4}$ alkyl-cyclopentane-1,2-diols, tetra-$C_{1-4}$ alkyl-cyclopentane-1,3-diols, penta-$C_{1-4}$ alkyl-cyclopentane-1,2-diols, penta-$C_{1-4}$ alkyl-cyclopentane-1,3-diols, hexa-$C_{14}$ alkyl-cyclopentane-1,2-diols, hexa-$C_{1-4}$ alkyl-cyclopentane-1,3-diols, or a combination comprising one or more of the foregoing. In some embodiments, the diol comprises cis- and trans-2,2,4,4-tetramethylcyclobutane-1,3-diol.

The epihalohydrin has the Formula 4

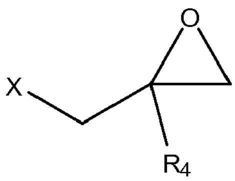

4

wherein $R_4$ is hydrogen or a $C_{1-4}$ alkyl group, and X is F, Cl, Br, or I. Examples of epihalohydrins are epifluorohydrin, epichlorohydrin, epibromohydrin, epiiodohydrin, substituted epihalohydrins, such as methylepichlorohydrin or chloroisobutylene oxide, or combinations comprising one or more of the foregoing. The epihalohydrin can serve not only as reactant but also as solvent or co-solvent if another solvent is employed.

The phase transfer catalyst can comprise one or more of quaternary ammonium, pyridinium, sulfonium, phosphonium, and thiazolium salts. Examples of phase transfer catalyst are n-benzylcinchonidinium chloride, n-benzylcinchoninium chloride benzyldimethylhexadecylammonium chloride, benzyldimethyltetradecylammonium chloride, benzyltributylammonium bromide, benzyltributylammonium chloride, benzyltriethylammonium bromide, benzyltriethylammonium chloride, benzyltriethylammonium iodide, benzyltriethylammonium tetrafluoroborate, benzyltrimethylammonium bromide, benzyltrimethylammonium chloride, benzyltriphenylphosphonium bromide, diethylmethylpropylammonium bromide, (-)-N,N-dimethylephedrinium bromide, 3,4-dimethyl-5-(2-hydroxyethyl)-thiazolium iodide, dodecylethyldimethylammonium bromide, (-)-N-dodecyl-N-methylephedrinium bromide, ethyldimethylpropylammonium bromide, ethylhexadecyldimethylammonium bromide, 3-ethyl-5-(2- hydroxyethyl)-4-methylthiazolium bromide, ethyltriphenylphosphonium

bromide, hexadecylpyridinium bromide, hexadecylpyridinium chloride, hexadecyltributylphosphonium bromide, hexadecyltrimethylammonium bromide, hexadecyltrimethylammonium chloride, methyltrioctylammonium bromide, methyltrioctylammonium chloride, methyltrioctylammonium iodide, octadecyltrimethylammonium bromide, phenyltrimethylammonium bromide, phenyltrimethylammonium chloride, tetrabutylammonium bromide, tetrabutylammonium chloride, tetrabutylammonium hexafluorophosphate, tetrabutylammonium hydrogen sulphate, tetrabutylammonium hydroxide, tetrabutylammonium methanesulphonate, tetrabutylammonium perchlorate, tetrabutylammonium tetrafluoroporate, tetrabutylammonium tetraphenylborate, tetrabutylammonium trifluoromethanesulphonate, tetrabutylphosphonium chloride, tetradecyltrimethylammonium bromide, tetradodecylammonium bromide, tetradodecylammonium perchlorate, tetraethylammonium bromide, tetraethylammonium chloride, tetraethylammonium hexafluorophosphate, tetraethylammonium hydroxide, tetraethylammonium perchlorate, tetraethylammonium tetrafluoroburate, tetraethylammonium trifluoromethanesulphonate, tetraheptylammonium bromide, tetrahexylammonium benzoate, tetrahexylammonium bromide, tetrahexylammonium chloride, tetrahexylammonium hydrogen sulphate, tetrahexylammonium iodide, tetrahexylammonium perchlorate, tetrakis-(decyl)-ammonium bromide, tetrakis-(decyl)-ammonium perchlorate, tetraoctylammonium bromide, tetraoctylammonium perchlorate, tetrapentylammonium bromide, tetrapentylammonium iodide, tetraphenylarsonium chloride, tetraphenylphosphonium bromide, tetraphenylphosphonium chloride, tetrapropylammonium bromide, tetrapropylammonium hydroxide, tetrapropylammonium iodide, tetrapropylammonium perchlorate, tetrapropylammonium tetrafluoroborate, tributylheptylammonium bromide tributylmethylammonium bromide, tributylmethylammonium chloride, tributylmethylammonium hydroxide, tributylmethylammonium iodide, tributylpentylammonium bromide, tricaprylmethylammonium chloride ("ALIQUAT™ 336"), triethylammonium bromide, and combinations comprising one or more of the foregoing. In some embodiments, the phase transfer catalyst is selected from benzyltriethylammonium bromide, benzyltriethylammonium chloride, benzyltriethylammonium iodide, benzyltriethylammonium tetrafluoroborate, benzyltrimethylammonium bromide, benzyltrimethylammonium chloride, and a combination comprising one or more of the foregoing. The phase transfer catalyst can be added in an initial amount of 0.01 to 5 weight %, more specifically from 0.05 to 2.5 weight %, based on the weight of the diol. In some embodiments, an additional amount of phase transfer catalyst is added to the reaction mixture after one or more of steps (c).

The method optionally employs an organic solvent. The organic solvent, if used, can comprise aromatic hydrocarbons (such as toluene, benzene, and xylene), aliphatic hydrocarbons (such as pentane, hexane, heptane, and octane), ketones (such as acetone, methyl ethyl ketone, and methyl isobutyl ketone), ethers and cyclic ethers (such as diethyl ether, dibutyl ether, dioxane, ethylene glycol dimethyl ether, and tetrahydrofuran), halogenated hydrocarbons (such as carbon tetrachloride, trichloroethylene, chloroform, dichloromethane, ethylene dichloride, methyl chloroform, and tetrachloroethane), sulfoxides, amides (such as N,N-dimethylformamide and N,N-dimethylacetamide), aliphatic nitriles (such as acetonitrile), or a combination comprising one or more of the foregoing. The organic solvent can be present in an amount of 1 to 250 weight %, specifically 1 to 50 weight % based on the total weight of the diol.

The method comprises contacting a basic acting substance and water with the mixture of diol, epihalohydrin, phase transfer catalyst, and optional organic solvent. Basic acting substances (bases) include alkali metal or alkaline earth metal hydroxides, carbonates and bicarbonates, and a combination thereof. Examples of basic acting substances are NaOH, KOH, LiOH, $Ca(OH)_2$, $Ba(OH)_2$, $Mg(OH)_2$, $Mn(OH)_2$, $Na_2CO_3$, $K_2CO_3$, $Li_2CO_3$, $CaCO_3$, $BaCO_3$, $Mg_2CO_3$, $MnCO_3$, $NaHCO_3$, $KHCO_3$, $MgHCO_3$, $LiHCO_3$, $Ca(HCO_3)_2$, $Ba(HCO_3)_2$, $Mn(HCO_3)_2$, and a combination thereof. In some embodiments, the basic acting substance is an alkali metal hydroxide, such as NaOH or KOH, both which can be added as aqueous solutions.

The diol, the epihalohydrin, the phase transfer catalyst, and optionally the organic solvent can be added to a reactor in any order. The equivalent ratio of hydroxyl groups in the diol to epihalohydrin can be 1:1 to 1:25, specifically 1:1.5 to 1:5, more specifically 1:2 to 1:3. The epoxidation can be conducted under an inert atmosphere such as nitrogen.

Step (b), contacting a basic acting substance with the mixture of step (a) and step (c), washing the mixture of step (b) with an aqueous solvent to substantially remove salts, can be repeated at least once, specifically at least twice, and more specifically at least three times. Thus, the basic acting substance can be added in two or more stages, specifically in three or more stages, and more specifically in four or more stages. The total equivalent ratio of hydroxyl groups in the diol to basic acting substance can be 1:1 to 1:10, specifically 1:1.1 to 1:6, more specifically 1:1.2 to 1:4.5, independently in each step (b). The stoichiometric amount of basic acting substance added at each stage is independent of that added in the other stages. Thus, for example, in stage 1, a 1:1.2 equivalent ratio of hydroxyl groups in the diol to basic acting substance may be used followed by three additional stages each using a 1:1 equivalent ratio for a total equivalent ratio of 1:4.2 for the four stages. The basic acting substance can be dissolved in the water. The concentration of basic acting substance in the water varies depending upon the solubility of the particular basic acting substance employed, the temperature of the water, the viscosity of the resultant solution, and other variables. It is generally desirable to use the most concentrated aqueous basic acting substance which can be practically handled in the epoxidation process. In some embodiments, the basic acting substance is 50 weight % aqueous sodium hydroxide. Agitation is beneficially employed in the epoxidation at a rate such that the reactants are contacted together causing the reaction to progress. Each addition of basic acting substance is generally performed at a rate which maintains the desired

temperature range in the reactor either with or without heating or cooling of the reactor. The reaction temperature can be from 20 °C to 75 °C, specifically from 20 °C to 50 °C, and more specifically from 25 °C to 40 °C.

After each stage of basic acting substance addition, the agitation can be stopped, and the formed epoxy resin can be washed by the addition of sufficient water to dissolve salts forming a separate aqueous phase. The separated aqueous layer can be removed and discarded and the organic layer recovered and added back into the reactor for use in the next stage of reaction with additional aqueous basic acting substance. Certain diols are incompletely soluble in the organic layer and are observed as a water insoluble precipitate which may be recovered and added back into the reactor for use in the next stage of reaction. A specific diol which exhibits only partial solubility in the organic phase is cis- and trans-2,2,4,4-tetramethylcyclobutane-1,3-diol. Because the phase transfer catalyst is partially or totally soluble in the aqueous phase, additional phase transfer catalyst is generally added to the reactor containing the organic phase after washing with water and prior to addition of more aqueous basic acting substance. Thus, in some embodiments, an additional amount of phase transfer catalyst is added to the reaction mixture after one or more of steps (c). Various analytical methods such as gas chromatography, high performance liquid chromatography, and gel permeation chromatography can be used to monitor the progress of the epoxidation.

Any unreacted diol of Formula 3 present in each step (c) can be added back to the reaction mixture in each step (b). The diol of Formula 3 can be insoluble, or partly soluble, in the reaction mixture of step (a) comprising the diol, the epihalohydrin, the phase transfer catalyst, and optionally the organic solvent. For example, when the diol of Formula 3 is cis- and trans-2,2,4,4-tetramethylcyclobutane-1,3-diol, the epihalohydrin is epichlorohydrin, and the organic solvent is toluene, unreacted cis- and trans-2,2,4,4-tetramethylcyclobutane-1,3-diol is present as a solid phase in step (c). The solid cis- and trans-2,2,4,4-tetramethylcyclobutane-1,3-diol can be isolated by filtration, for example by vacuum filtration of the step (c) mixture through a fritted glass funnel. The cis- and trans-2,2,4,4-tetramethylcyclobutane-1,3-diol isolated by filtration can then be added back to the organic layer decanted from the aqueous wash layer of step (c), and steps (b) and (c) can be repeated. In this way, the conversion of cis- and trans-2,2,4,4-tetramethylcyclobutane-1,3-diol to cis- and trans-2,2,4,4-tetramethylcyclobutane-1,3-diglycidyl ether can be maximized.

As described above, step (b), contacting a basic acting substance with the mixture of step (a) and step (c), washing the mixture of step (b) with an aqueous solvent to substantially remove salts, can be repeated at least once, specifically at least twice, and more specifically at least three times. In this variation of the method, unreacted diol of Formula 3 present in each step (c) can be isolated and added back to the reaction mixture in each step (b).

Contacting the basic acting substance and water with the mixture of step (a) can be accompanied by removal of water by distillation. The epoxy resin can be formed by an azeotropic or anhydrous process, the process comprising the steps of: (a) forming a reaction mixture comprising a diol of Formula 3

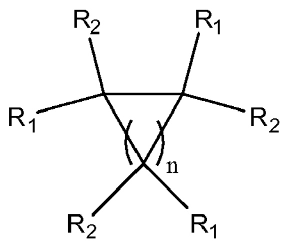
3

wherein n is 1, 2, or 3; each $R_1$ is independently hydrogen, $C_{1-12}$ alkyl, $C_{3-12}$ cycloalkyl, or $C_{6-24}$ aryl; and each $R_2$ is independently hydrogen, $C_{1-12}$ alkyl, hydroxyl, $C_{1-12}$ hydroxyalkyl, or $C_{6-24}$ hydroxyaryl, with the proviso that the diol has two hydroxyl, $C_{1-12}$ hydroxyalkyl, or $C_{6-24}$ hydroxyaryl groups; an epihalohydrin; a phase transfer catalyst; and optionally an organic solvent; (b) contacting a basic acting substance and water with the mixture of step (a) while removing water by distillation; (c) washing the mixture of step (b) with an aqueous solvent to substantially remove salts to form the epoxy resin; and (e) isolating the epoxy resin. The distillation can be, for example, azeotropic distillation, co-distillation, or flash distillation. The distillation can be conducted under a vacuum sufficient to remove the water at the distillation temperature. In some embodiments, the distillation is azeotropic distillation. The azeotropic distillation can comprise distilling a binary epihalohydrin-water azeotrope or, when organic solvent is present, distilling a ternary epihalohydrin-water-organic solvent azeotrope, to remove the water.

After a final stage of contacting a basic acting substance with the mixture of diol, epihalohydrin, phase transfer catalyst, and optional organic solvent, the epoxy resin can be isolated from the reaction mixture. The isolation can be performed using known methods such as water washing or extraction, solvent extraction, decantation, electrostatic coalescence, gravity filtration, vacuum filtration, centrifugation, distillation, falling film distillation, wiped film distillation, column chromatography, and a combination comprising one or more of the foregoing. The isolation can comprise the steps of washing the epoxy resin with water in an amount sufficient to substantially remove salts, and vacuum distillation, for example by rotary evaporation, to remove volatile components such as the organic solvent and unreacted epihalohydrin, when present.

The diglycidyl ether can be isolated from the corresponding epoxy resin in high purity by distillation, for example by fractional vacuum distillation or wiped film distillation. During the isolation of the diglycidyl ether by distillation, fractions with lower boiling points ("lights") can be removed and recovered. The lights can comprise unreacted epihalohydrin and epoxidation by-products such as glycidol and 2-epoxypropyl ether. Recovered epihalohydrin can be recycled. Any unreacted diol can also be recovered and recycled. The residue from fractional distillation after removal of lights, diol, monoglycidyl ethers, diglycidyl ethers, and other volatile components from the epoxy resin, can comprise a concentrated source of oligomer. This oligomer can be used as an epoxy resin itself, or can be used as a component to be blended, in a controlled amount, with other epoxy resins.

The epoxy resin can comprise greater than or equal to 50 area %, specifically greater than or equal to 70 area %, more specifically greater than or equal to 85 area %, more specifically greater than or equal to 90 area %, more specifically greater than or equal to 95 area %, still more specifically greater than or equal to 98 area %, yet more specifically greater than or equal 99 area %, and even more specifically greater than or equal to 99.5 area %, of the diglycidyl ether, based on total peak area for the epoxy resin as determined by gas chromatography. For the preparation of advanced epoxy resins, it is desirable for the epoxy resin to comprise greater than or equal to 90 area %, more specifically greater than or equal to 95 area %, still more specifically greater than or equal to 98 area %, yet more specifically greater than or equal 99 area %, and even more specifically greater than or equal to 99.5 area %, of the diglycidyl ether, based on total peak area for the epoxy resin as determined by gas chromatography. Without being bound by theory, the use of lower purity diglycidyl ether in the advancement reaction can result in crosslinking and gelation, due to the presence of oligomers. The target purity can be achieved, for example, by vacuum distillation. The impurities can comprise a monoglycidyl ether, oligomeric epoxy resins, hereinafter referred to as "oligomer(s)", and other minor components.

The monoglycidyl ether that can be present as an impurity is of Formula 5

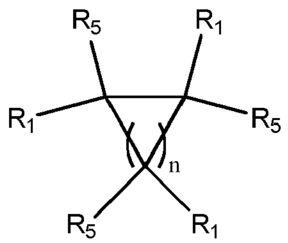

5

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, hydroxyl, $C_{1-12}$ hydroxyalkyl, $C_{6-24}$ hydroxyaryl, or a glycidyl ether group, with the proviso that the monoglycidyl ether has one glycidyl ether group and one hydroxyl, $C_{1-12}$ hydroxyalkyl, or $C_{6-24}$ hydroxyaryl group. Because the monoglycidyl ether can function as a chain terminator in the advancement reaction, the amount of monoglycidyl ether can be minimized in order to obtain the desired molecular weight. Thus, the amount of monoglycidyl ether present as an impurity can be 0 area % to 20 area %, specifically 0 area % to 10 area %, and more specifically 0 area % to 5 area %, based on total peak area for the epoxy resin as determined by gas chromatography.

Oligomeric epoxy resins, hereinafter referred to as "oligomer(s)", can be present as impurities. The oligomers are oligomeric reaction products of an epihalohydrin and the diol of Formula 3. The amount of oligomer present as in impurity can be 0 area % to 30 area %, 0 area % to 20 area %, 0 area % to 10 area %, 0 area % to 5 area %, 0 area % to 4 area %, 0 area % to 3 area %, 0 area % to 2 area %, 0 area % to 1 area %, or 0 area % to 0.5 area %, based on the weight of the epoxy resin. The oligomers can comprise greater than one cycloaliphatic ring of Formula 1 linked together by covalent bonds, and/or an epoxide functionality of greater than two. Because of the presence of greater than two epoxide groups per molecule in some oligomers, the presence of these oligomers in the diglycidyl ether can result in unwanted branching, high viscosity, and premature crosslinking or gelation during an advancement reaction. Minimization of the oligomer amount allows the advancement reaction to progress to completion without the aforementioned problems. Thus, for the preparation of advanced epoxy resins, it is desirable that the epoxy resin comprises 0 area % to 2 area %, specifically 0 area % to 1 area %, and more specifically, 0 area % to 0.5 area %, of oligomers, based on total peak area for the epoxy resin as determined by gas chromatography. The epoxy resin can also be essentially free of oligomers. The phrase "essentially free of oligomers" means that the epoxy resin comprises less than or equal to 1 area %, specifically less than or equal to 0.5 area %, of oligomers, based on total peak area for the epoxy resin as determined by gas chromatography.

Other minor components can be present as impurities in an amount of 0 area % to 5 area %, more specifically 0 area % to 2 area %, and still more specifically 0 area % to 0.5 area %, based on total peak area for the epoxy resin

as determined by gas chromatography.

The epoxy resin can be characterized by epoxide equivalent weight and weight percent oxirane oxygen content. A method for determination of epoxide equivalent and weight percent oxirane oxygen content is given by Jay, R.R., "Direct Titration of Epoxy Compounds and Aziridines", Analytical Chemistry, 36, 3, 667-668 (March, 1964). The epoxy resin can have an oxirane oxygen content of greater than or equal to 85 %, specifically greater than or equal to 90 %, more specifically greater than or equal to 95 %, still more specifically greater than or equal to 98%, yet more specifically greater than or equal to 99%, and even more specifically greater than or equal to 99.5 %, of the theoretical oxirane oxygen content for the diglycidyl ether. The target oxirane oxygen content depends upon the intended end use for the diglycidyl ether. In some embodiments, the diglycidyl ether has an oxirane oxygen content of greater than or equal to 90 % of theoretical.

In some embodiments, the diglycidyl ether comprises cis- and trans-2,2,4,4-tetramethylcyclobutane-1,3-diglycidyl ether. When the diglycidyl ether comprises cis- and trans-2,2,4,4-tetramethylcyclobutane-1,3-diglycidyl ether, the theoretical epoxide equivalent weight is 128.22, and the theoretical oxirane oxygen content is 12.48 weight %. Thus, when the diglycidyl ether comprises cis- and trans-2,2,4,4-tetramethylcyclobutane-1,3-diglycidyl ether, the oxirane oxygen content of the epoxy resin can be greater than or equal to 10.6 weight % (85% of 12.48 weight %), greater than or equal to 11.2 weight % (90% of 12.48 weight %), specifically greater than or equal to 11.8 weight % (95% of 12.48 weight %), more specifically greater than or equal to 12.2 weight % (98% of 12.48 weight %), and still more specifically, greater than or equal to 12.3 weight % (99% of 12.48 weight %), and yet more specifically greater than or equal to 12.4 weight % (99.5% of 12.48 weight %). When the diglycidyl ether comprises cis- and trans-2,2,4,4-tetramethylcyclobutane-1,3-diglycidyl ether, the epoxy resin can have an epoxide equivalent weight of less than or equal to 150.8, specifically less than or equal to 142.5, more specifically less than or equal to 134.9, still more specifically less than or equal to 130.8, yet more specifically less than or equal to 129.5, and even more specifically less than or equal to 128.9. In some embodiments, the epoxy resin has an oxirane oxygen content of greater than or equal to 11.2 weight % and an epoxide equivalent weight of less than or equal to 142.5.

Advantageously, the epoxy resin and the advanced epoxy resin can each have a low total chlorine content. Epoxy resins can be made by Lewis-acid catalyzed coupling of diols with epichlorohydrin. Stannous chloride is an example of a Lewis acid that can be used. Epoxy resins formed by this method can comprise up to 5 weight % or more of chlorine, based on the weight of the epoxy resin, and present as chloromethyl groups. In Comparative Example 6, the chloromethyl compounds of Formulae 6, 7, 8, and 9 were detected by GC-MS in a commercial sample of an epoxy resin made from cis- and trans-1,4-cyclohexanedimethanol by Lewis-acid catalyzed coupling. The compound of Formula 7 alone was present at greater than 80 area %, based on total peak area for the epoxy resin as determined by gas chromatography. In contrast, the epoxy resin and the

advanced epoxy resin can each have a total chlorine content of less than or equal to 2 weight %, specifically less than or equal to 1 weight %, more specifically less than or equal to 0.5 weight %, still more specifically less than or equal to 0.1 weight %, and yet more specifically less than or equal to 0.01 weight %. In some embodiments, the epoxy resin and the advanced epoxy resin can each have a total chlorine content of less than or equal to 2 weight %, based on the weight of the epoxy resin. The epoxy resin and advanced epoxy resin can each have a total chlorine content of essentially zero.

The advanced epoxy resin comprises the reaction product of the diglycidyl ether and at least one difunctional compound selected from an aromatic diol and a dicarboxylic acid. In some embodiments, the difunctional compound comprises an aromatic diol of Formula 6

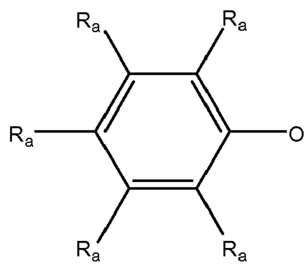

6

wherein one of the $R_a$ groups is a hydroxyl group and the four remaining $R_a$ groups are each independently hydrogen, an alkyl, cycloalkyl, an aryl, an aralkyl, a halogen, a nitro, a blocked isocyanate, or an alkyloxy group; or wherein any two of the remaining $R_a$ groups form a fused aliphatic or aromatic ring.

The aromatic diol can comprise catechol, a substituted catechol, resorcinol, a substituted resorcinol, hydroquinone, a substituted hydroquinone, a naphthalene diol, a substituted naphthalene diol, or a combination comprising one or more of the foregoing aromatic diols. In some embodiments, the aromatic diol comprises catechol, a substituted

catechol, or a combination comprising at least one of the foregoing aromatic diols.

The aromatic diol can comprise an aromatic diol of Formula 7

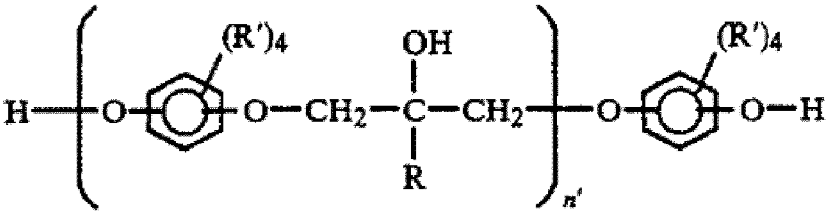 7,

an aromatic diol of Formula 8

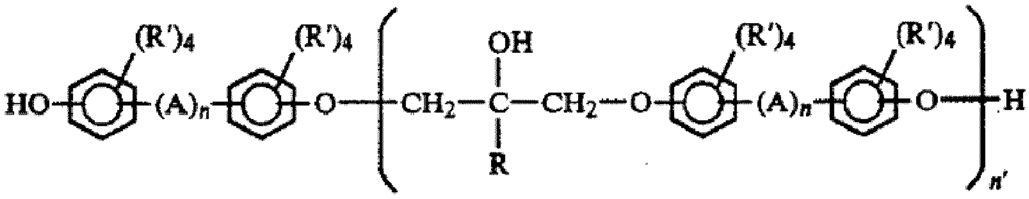 8

or combinations comprising one or more of the foregoing. In Formulae 7 and 8, A is a divalent hydrocarbon group having 1 to 12, specifically 1 to 6, carbon atoms, -S-, -S-S-, $-SO_2-$, -SO-, -CO-, or -O-; each R independently is hydrogen or a hydrocarbyl group having 1 to 4 carbon atoms; each R' independently is hydrogen, a hydrocarbyl or hydrocarbyloxy group having 1 to 4 carbon atoms, or a halogen, preferably chlorine or bromine; n has a value of zero or 1; and n' has a value of zero to 10, specifically of 1 to 5.

The aromatic diol of Formula 8 can comprise the reaction product of bisphenol A, a substituted bisphenol A, bisphenol F, a substituted bisphenol F, bisphenol S, a substituted bisphenol S, bisphenol K, a substituted bisphenol K, phenolphthalein, a substituted phenolphthalein, or a combination comprising at least one of the foregoing.

In some embodiments, the difunctional compound is a dicarboxylic acid. The dicarboxylic acid can comprise an aromatic dicarboxylic acid such as phthalic acid, a substituted phthalic acid, isophthalic acid, terephthalic acid, a naphthalene dicarboxylic acid, or combination comprising at least one of the foregoing aromatic dicarboxylic acids. In some embodiments, the dicarboxylic acid comprises 2,6-naphthalene dicarboxylic acid. The two carboxylic acid groups in naphthalene dicarboxylic acid can occupy any positions on the naphthalene ring. The dicarboxylic acid can comprise an aliphatic or cycloaliphatic dicarboxylic acid such as succinic acid, adipic acid, maleic acid, fumaric acid, dodecanedioic acid, dimer acid, cyclohexanedicarboxylic acid, or a combination comprising at least one of the foregoing aliphatic or cycloaliphatic dicarboxylic acids. In some embodiments, the difunctional compound comprises a dicarboxylic acid comprising phthalic acid, a substituted phthalic acid, isophthalic acid, terephthalic acid, a naphthalene dicarboxylic acid, succinic acid, adipic acid, maleic acid, fumaric acid, dodecanedioic acid, dimer acid, cyclohexanedicarboxylic acid, or a combination comprising at least one of the foregoing dicarboxylic acids.

A method of making the advanced epoxy resin comprises reacting the epoxy resin comprising the diglycidyl ether with at least one difunctional compound selected from an aromatic diol and a dicarboxylic acid. A catalyst and a solvent can optionally be used. The epoxy resin, the at least one difunctional compound selected from an aromatic diol and a dicarboxylic acid, optional catalyst, and optional solvent can be mixed in any order. The reactants can be mixed and heated at a temperature and time sufficient to achieve the desired degree of advancement. The method to prepare the advanced epoxy resin can be a batch or continuous process.

The molar ratio of the difunctional compound and the diglycidyl ether, for example cis- and trans-2,2,4,4-tetramethylcyclobutane-1,3-diglycidyl ether, can be 5:1 to 1:5, specifically 1:1.5 to 1.5:1, and more specifically 1:1.1 to 1.1:1. These ratios result in high molecular weight advanced epoxy resins. As described in polymer textbooks, such as George Odian in Principles of Polymerization, 4th edition, a near stoichiometric ratio, e.g. a molar ratio of difunctional compound and diglycidyl ether of 1.1:1 to 1:1.1 can be used to prepare substantially linear high molecular weight advanced epoxy resins. A significant deviation from the stoichiometric ratio can result in oligomers or low molecular weight advanced epoxy resins.

The temperature of the advancement reaction can be 20 °C to 250 °C, specifically 100 °C to 250 °C, more specifically 125 °C to 225 °C, and still more specifically, 150 °C to 200 °C. The pressure of the advancement reaction can be 0.1 bar to 10 bar, specifically 0.5 bar to 5 bar, and more specifically 0.9 bar to 1.1 bar.

At least one catalyst can be used in the advancement reaction. Catalysts for the advancement reaction can be selected from one or more of a metal salt, an alkali metal salt, an alkaline earth metal salt, a tertiary amine, a quaternary

ammonium salt, a sulfonium salt, a quaternary phosphonium salt, a phosphine, and combinations thereof. Examples of catalysts are tetrabutylphosphonium acetate-acetic acid complex, ethyltriphenylphosphonium acetate-acetic acid complex, or a combination thereof. The catalyst is generally employed in an amount of 0.0010 wt % to 10 wt %, specifically 0.01 wt % to 10 wt %, more specifically 0.05 wt % to 5 wt %, and still more specifically 0.1 wt % to 4 wt %, based on the total weight of the epoxy resin, difunctional compound, and other monomers, if present.

The advanced epoxy resin can be modified by reaction with other reactants besides the epoxy resin and the difunctional compound. For example, a reactant with functional groups having different reactivity toward the epoxide group can be employed to provide a reactive intermediate, either *in situ* or in a separate reaction. The intermediate can then be further reacted with the same or different reactants to produce an advanced epoxy resin. For example, a monophenol-monocarboxylic acid can be reacted with the epoxy under conditions which favor reaction of the carboxylic acid group and leave the phenolic hydroxyl group substantially unreacted. The resultant phenolic hydroxyl terminated intermediate can then be reacted with an another epoxy resin or another epoxy resin and difunctional compound to produce the advanced epoxy resin.

As another example, a dicarboxylic acid can be reacted with the epoxy resin under conditions in which an epoxy-terminated intermediate is produced. The epoxy-terminated intermediate can then be reacted with an aromatic diol or an another epoxy resin and additional difunctional compound to produce the advanced epoxy resin. This method beneficially allows for incorporation of different monomer units into the advanced epoxy resin, with control of the relative positions of the different monomer units in the advanced epoxy resin.

Depending upon the advancement reaction stoichiometry, the advanced epoxy resin can contain unreacted terminal epoxide groups. The advanced epoxy resin can also contain unreacted groups from the difunctional compound, for example unreacted terminal phenolic hydroxyl groups or unreacted terminal carboxylic acid groups. Thus, it can be beneficial to react all or a portion of any of these end groups with one or more monofunctional reactants. The monofunctional reactant can also serve as a chain termination agent. Thus, the monofunctional reactant can be added during the advancement reaction to terminate the growing oligomer chains and control molecular weight build. Incorporation of monofunctional reactants into the advanced epoxy resin modifies its cure characteristics and/or the physical or mechanical properties as well.

Examples of monofunctional reactants reactive with a terminal epoxide groups include phenol, substituted phenols, naphthols, substituted naphthols, thiols, benzoic acid, substituted benzoic acids, phenylacetic acid, substituted phenylacetic acids, cyclohexane monocarboxylic acid, substituted cyclohexane monocarboxylic acids, naphthalene monocarboxylic acid, aliphatic monocarboxylic acids, such as hexanoic acid; secondary monoamines, such as N-methylcyclohexylamine or dihexylamine; dialkanolamines, such as diethanolamine; and combinations comprising one or more of the foregoing. Terminal phenolic hydroxyl groups and terminal carboxylic acid groups can be reacted with a monoepoxide, such as phenylglycidyl ether, the monoglycidyl ether of cyclohexanol, the monoglycidyl ether of cis- and trans-2,2,4,4-tetramethylcyclobutane-1,3-diol, or the monoglycidyl ether of cyclohexanedimethanol.

The advanced epoxy resin modified via reaction with one or more monofunctional reactants can exhibit enhanced physical and/or mechanical properties, such as adhesion to a metal substrate, toughness, and processability useful, which are useful for various coatings applications, for example can coatings.

Any ethylenic or aromatic unsaturation in the advanced epoxy resin can be hydrogenated to afford a partially or fully saturated resin.

Other examples of modifications of the advanced epoxy resin include, but are not limited to, capping of the epoxy resin with unsaturated acid monomers such as acrylic acids for radiation curing applications, and making water dispersible resins for use in waterborne spray and roller coat applications for beverage and food cans. Thus, the advanced epoxy resin can be made water dispersible by: (a) adding water-dispersible acrylic or polyester resins; (b) reacting the advanced epoxy resin with a water-dispersible acrylic or polyester resins; (c) grafting the advanced epoxy resin with at least one ethylenically unsaturated acid monomer; (d) grafting the advanced epoxy resin with at least one ethylenically unsaturated acid monomer and at least one nonionic ethylenically unsaturated monomer; or (e) reacting the advanced epoxy resin with phosphoric acid and water, and at least partially neutralizing the product of (a), (b), (c), (d), or (e) with a base. For example, EP 17911, U.S. Patent No. 6,306,934, WO 2000/039190, and WO 2005/080517, incorporated herein by reference, describe the formation of water dispersible epoxy resins and forming aqueous dispersions thereof.

The advanced epoxy resin can also be made water dispersible by: (a) incorporating an ethylenically unsaturated dicarboxylic acid into the backbone; (b) grafting the advanced epoxy resin with at least one ethylenically unsaturated acid monomer or grafting the advanced epoxy resin with at least one ethylenically unsaturated acid monomer and at least one nonionic ethylenically unsaturated monomer; and (c) at least partially neutralizing the reaction product of steps (a) and (b) with a base.

The advanced epoxy resin can have a weight average molecular weight of 300 to 1,000,000 g/mole, specifically 1,000 to 500,000 g/mole, more specifically 2,000 to 100,000 g/mole, and even more specifically 10,000 to 80,000 g/mole, as determined by gel permeation chromatography based on polystyrene standards. In some embodiments, the advanced epoxy resin has a weight average molecular weight of greater than or equal to 20,000 g/mole, specifically greater than

or equal to 40,000 g/mole, as determined by gel permeation chromatography based on polystyrene standards. The advanced epoxy resin composition can have a glass transition temperature of -50 to 200 °C, specifically 0 to 150 °C, more specifically 10 to 120 °C, still more specifically 20 to 100 °C, and yet more specifically 25 to 90 °C. In some embodiments, the advanced epoxy resin composition has a glass transition temperature of greater than or equal to 30 °C.

The elongation at break of the advanced epoxy resin at room temperature can be 4 % to 10,000 %, specifically 10 % to 5000 %, more specifically 20 % to 2000 %, still more specifically 30 % to 1500 %, yet more specifically 40 % to 1200 %, and even more specifically 50 % to 1100 %.

The tensile toughness of the advanced epoxy resin at room temperature can be 0.05 MPa to 500 MPa, specifically 0.05 MPa to 500 MPa, more specifically 0.1 MPa to 100 MPa, still more specifically 0.5 MPa to 50 MPa, yet more specifically 0.8 MPa to 30 MPa, and even more specifically 1 MPa to 20 MPa.

A curing agent and/or a curing catalyst can be added to the advanced epoxy resin composition to form a curable advanced epoxy resin composition. Thus in some embodiments, a curable advanced epoxy resin composition comprises the advanced epoxy resin, a curing agent, and optionally a curing catalyst. All of the above-described variations in the advanced epoxy resin apply as well to the curable advanced epoxy resin composition.

The amount of advanced epoxy resin used in the curable advanced epoxy resin composition can be 99.9 wt % to 10 wt %; specifically 99 wt % to 50 wt %; more specifically 98 wt % to 75 wt%; and even more specifically, 95 wt % to 85 wt % based on the total weight of the advanced epoxy resin and the curing agent. Generally, the amount of advanced epoxy resin is selected based on the desired balance of properties of the resulting cured advanced epoxy resin composition.

A curing agent useful for the curable advanced epoxy resin composition can comprise any known crosslinker for epoxy resins such as for example an epoxy resin, a phenolic resole, an amine-formaldehyde resin, an amide-formaldehyde resin, an anhydride resin, a polyvalent phenolic compound, a polyvalent amine compound, or a polyvalent phenolic and amine compound. The curing agent can also be selected from any crosslinkers comprising reactive groups such as active alcohol (-OH) groups, e.g. an alkylol such as ethylol or methylol groups, epoxy groups, carbodiimide groups, isocyanate groups, blocked isocyanate groups, aziridinyl groups, oxazoline groups, carboxylic acid groups, anhydride groups, ethylenically unsaturated groups curable with a free radical initiator and/or actinic radiation, and combinations thereof. The curing agent can be a phenol-formaldehyde resin, for example METHYLON 75108. METHYLON 75108 is a mixture of allyl ethers of mono-, di-, and trimethylol phenols, available from Durez Corporation, Detroit, MI.

The amount of curing agent can vary depending on various factors such as the type of curing agent and the amount of reactive groups present in the advanced epoxy resin. The amount of curing agent can be sufficient to cure the epoxy resin. In general, the amount of curing agent can be 0.1 wt % to 90 wt %, specifically 1 wt % to 50 wt %, more specifically 2 wt % to 25 wt %, and most specifically 5 wt % to 15 wt %, based on the total weight of the advanced epoxy resin and the curing agent. For curing agents such as polyvalent phenolic compounds, polyvalent amine compounds, and polyvalent phenolic and amine compounds, the curing agent can be present in an amount wherein the equivalent ratio of reactive hydrogen atoms in the curing agent to epoxide groups in the epoxy resin is 0.70:1 to 1.5:1, specifically 0.95:1 to 1.05:1 equivalents of reactive hydrogen atom in the curing agent per equivalent of epoxide group in the epoxy resin.

The amount of curing agent used in the curable advanced epoxy resin composition is selected based on the desired balance of properties of the resulting cured advanced epoxy resin composition.

In preparing the curable advanced epoxy resin composition, at least one curing catalyst can be used to facilitate the crosslinking of the advanced epoxy resin with the curing agent. The curing catalyst can be, for example, an acid such as phosphoric acid or an organosulfonic acid, a base such as a tertiary amine, an organometallic compound such as organic derivative of tin, bismuth, zinc, or titanium, an inorganic compound such as oxides or halides of tin, iron, boron, or manganese; and combinations thereof. The curing catalyst can also be a latent curing catalyst. The amount of curing catalyst can be 0.01 wt % to 10 wt %; specifically 0.05 wt % to 5 wt %, and more specifically 0.1 wt % to 2 wt %, based on the total weight of the advanced epoxy resin and the curing agent.

The curable composition can optionally comprise a solvent to facilitate the formation of a cured coating from the curable epoxy resin composition. Examples of solvents are aromatics such as xylene, ketones such as methyl ethyl ketone and cyclohexanone, ethers such as the monobutyl ethylene glycol ether and diethylene glycol dimethyl ether (diglyme), alcohols such as butanols, and combinations thereof. The amount of solvent can be 0.01 wt % to 80 wt %, specifically 1 wt % to 70 wt %, and more specifically 10 wt % to 60 wt %, based on the total weight of the advanced epoxy resin and the curing agent. The amount of solvent used affects the viscosity of the curable composition. The curable composition can also be free of solvent, for example when the curable composition is a powder coating.

The curable composition can optionally comprise an additive selected from other resins, dispersants, surfactants, adhesion promoters, defoamers, wetting agents, flow control agents, anti-cratering agents, pigments, dyes, fillers, plasticizers, catalyst deactivators, and combinations thereof. Examples of other resins are acrylics, polyesters; polyolefins, polyurethanes, alkyds, polyvinyl acetates, epoxy resins other than the advanced epoxy resin, vinyl resins,

and combinations thereof.

A method of curing a curable advanced epoxy resin composition comprises reacting the advanced epoxy resin composition with a curing agent, and optionally a curing catalyst. All of the above-described variations in the advanced epoxy resin, the curing agent, and curing catalyst of the curable composition apply as well to the method of curing the curable composition. The curing temperature can vary widely depending upon the specific curable composition. For example, the curing temperature can be 0 to 300 °C, specifically 20 to 250 °C. The heating can occur in stages where the heat in increased gradually with time. The curing can occur with or without agitation. The curing reaction can be carried out at a pressure of 0.01 to 1000 bar (0.001 to 100 MPa), specifically 0.1 to 100 bar (0.01 to 10 MPa, and more specifically 0.5 to 10 bar (0.05 to 1 MPa).

The curing time can be such that either full curing or partial curing to a B-stage composition is achieved. In the case of partial curing, for example to a B-stage composition, the B-stage composition can be fully cured at a later time. The optimal curing time can vary widely depending upon the specific curable composition, the curing temperature, and whether a B-stage composition is desired. For example, the curing time can be 2 seconds to 14 days, specifically 5 seconds to 7 days. In some embodiments, for example for a general protective or maintenance coating, the curable composition can be cured at low temperature, specifically at -10 to 50 °C, more specifically 0 to 40 °C, and still more specifically 20 to 30 °C, and for up to 14 days or more, specifically 1 day to 7 days. In other embodiments, for example a factory-applied coating, the curable composition can be cured at high temperature, specifically 50 to 300 °C, more specifically 80 to 300 °C, still more specifically 100 to 250 °C, and yet more specifically 100 to 220 °C, and for several seconds to several minutes, specifically 2 seconds to 30 minutes.

The curable advanced epoxy resin composition can be cured with a curing agent to form a cured advanced epoxy resin composition. Thus, a cured advanced epoxy resin comprises a reaction product of the advanced epoxy resin and a curing agent. All of the above-described variations in the curable advanced epoxy resin composition, including variations in the advanced epoxy resin and the curing agent, apply as well to the cured advanced epoxy resin composition.

The cured advanced epoxy resin composition can be in the form of a coating, a film, a solid, or a foam. For example, the cured advanced epoxy resin composition can be a coating, a film, an adhesive, a laminate, a composite, or an electronic device. The process to form the cured advanced epoxy resin composition can be, for example, gravity casting, vacuum casting, automatic pressure gelation (APG), vacuum pressure gelation (VPG), infusion, filament winding, lay up injection, transfer molding, prepreging, and coating, such as roller coating, dip coating, spray coating and brush coating. The curing process can be a batch or a continuous process.

The cured advanced epoxy resin composition can be in the form of a coating. In some embodiments, the cured advanced epoxy resin composition is in the form of a can coating or a general protective/maintenance coating. The coatings can have one or more advantageous properties, including high flexibility and good solvent resistance.

The cured advanced epoxy resin composition displays high flexibility as measured by the Wedge Bend Flexibility test. The failure percentage of the cured advanced epoxy resin compositions measured by Wedge Bend Flexibility can be less than or equal to 50 %, less than or equal to 25 %, less than or equal to 15 %, less than or equal to 10 %, less than or equal to 5 %, less than or equal to 4 %, less than or equal to 3 %, less than or equal to 2 %, or less than or equal to 1 %.

The cured advanced epoxy resin composition displays good solvent resistance as measured by the MEK Double Rub test. The solvent resistance of the resulting cured advanced epoxy resin compositions measured by MEK Double Rubs can be greater than or equal to 25, greater than or equal to 50, 50 to 200, 50 to 150, or 50 to 125.

The cured advanced epoxy resin composition can have one or more of: a failure rate of less than or equal to 5%, as measured by the wedge bend flexibility test; a solvent resistance of greater than or equal to 25 MEK double rubs; a Konig hardness of 100 to 250, specifically 160 to 220, measured according to ASTM D 4366; a crosshatch adhesion of 4B to 5B, specifically 5B, measured according to ASTM D 3359; and a pencil hardness ofB or higher, specifically HB or higher, measured according to ASTM D 3363.

The curable advance epoxy resin composition can be used to form articles. Thus, in some embodiments, an article comprises the cured advanced epoxy resin composition, wherein the article is a coating, an adhesive, an electrical or structural laminate, an electrical or structural composite, a filament winding, a molding, a casting, a potting, or an encapsulation.

The following examples further illustrate the invention in detail but are not to be construed to limit the scope thereof.

EXAMPLES

Standard abbreviations and trade names used in the detailed description, including the examples and comparative examples, are defined in Table 1.

Table 1

| | |
|---|---|
| Analytical | |
| AHEW | Amine hydrogen equivalent weight |
| cc | Cubic centimeters |
| cP | Centipoise |
| DI | Deionized |
| DMA | Dynamic mechanical analysis |
| DSC | Differential scanning calorimetry |
| EEW | Epoxide equivalent weight (grams of resin / epoxide equivalent) |
| eq | Equivalent(s) |
| g | Gram(s) |
| GC | Gas chromatograph, gas chromatographic |
| hr | Hour(s) |
| Hz | Hertz |
| in | Inch(es) |
| J | Joule(s) |
| L | Liter(s) |
| LPM | Liter(s) per minute |
| m | Meter(s) |
| meq | Milliequivalent(s) |
| min | Minutes |
| mL | Milliliter(s) |
| mm | Millimeter(s) |
| mN | Millinewton(s) |
| MS | Mass spectrometry, mass spectrometric |
| rpm | Revolution(s) per minute |
| sec | Seconds |
| Tg | Glass transition temperature |
| wt | Weight |
| w/v | Weight by volume |
| µm | Microgram(s) |
| µm | Micrometer(s) |
| °C | Degrees Celsius |
| Materials | |
| BYK-310 | Solution of a polyester-modified polydimethylsiloxane, available from BYK USA, Wallingford, CT |
| CHDM | Isomeric cyclohexanedimethanols |
| CHDM MGE | Monoglycidyl ether of isomeric cyclohexanedimethanols |
| CHDM DGE | Diglycidyl ether of isomeric cyclohexanedimethanols |
| MEK | Methylethylketone |

(continued)

| Materials | |
|---|---|
| METHYLON 75108 | Mixture of allyl ethers of mono-, di-, and tri-methylol phenols, available from Durez Corporation, Detroit, MI. |
| PTFE | Polytetrafluoroethylene |
| TMCBD | cis- and trans-2,2,4,4-tetramethylcyclobutane-1,3-diol |
| TMCBD MGE | Monoglycidyl ether of cis- and trans-2,2,4,4-tetramethylcyclobutane-1,3-diol |
| TMCBD DGE | Diglycidyl ether of cis- and trans-2,2,4,4-tetramethylcyclobutane-1,3-diol |

In the following examples and comparative examples, standard analytical equipment and methods were used as described below:

Gas Chromatographic (GC) Analysis

In the general method, a Hewlett Packard 5890 Series II Plus gas chromatograph was employed using a DB-1 capillary column (61.4 m by 0.25 mm with a 0.25 micrometer film thickness, Agilent). The column was maintained in the chromatograph oven at a 50 °C initial temperature. Both the injector inlet and flame ionization detector were maintained at 300 °C. Helium carrier gas flow through the column was maintained at 1.1 mL/min. For the analyses of the epoxy resins during synthesis, from rotary evaporation and from distillation, an initial oven temperature of 50 °C, with heating at 12 °C/min to a final oven temperature of 300 °C, was employed. Under these conditions, all of the components were eluted within the 50 min total time given for the analysis. The GC results for each component are expressed in area %, wherein area % refers to the peak area for the given component divided by the total peak area and multiplied by 100.

Samples for GC analysis during synthesis were prepared by collection of a 0.5 mL aliquot of the slurry product from the epoxidation reaction and addition to a vial containing 1 mL of acetonitrile. After shaking to mix, a portion of the slurry in acetonitrile was loaded into a 1 mL syringe (Norm-Ject, all polypropylene/polyethylene, Henke Sass Wolf GmBH) and passed through a syringe filter (Acrodisc CR 13 with 0.2 μm PTFE membrane, Pall Corporation, Gelman Laboratories) to remove any insoluble debris.

I.C.I. Cone and Plate Viscosity

Viscosity was determined on an I.C.I. Cone and Plate Viscometer Viscosity (model VR-4540) at 25 °C. In the method, the viscometer equipped with a 0-40 poise spindle (model VR-4140) and equilibrated to 25 °C was calibrated to zero then the sample applied and held 2 min with viscosity then checked and the reading taken after 15 seconds. Five to six duplicate viscosity tests were completed using a fresh aliquot of the particular product being tested. The individual measurements were averaged.

Percent Epoxide/Epoxide Equivalent Weight (EEW) Analysts

A modification of the standard titration method, that of Jay, R.R., "Direct Titration of Epoxy Compounds and Aziridines", Analytical Chemistry, 36, 3, 667-668 (March, 1964), was used to determine percent epoxide in the various epoxy resins. In the present adaptation of this method, the weighed sample (sample weight ranges from 0.15-0.20 g, a scale with 4 decimal place accuracy was used) was dissolved in dichloromethane (15 mL) followed by the addition of tetraethylammonium bromide solution in acetic acid (15 mL). The resultant solution treated with 3 drops of crystal violet indicator (0.1 % w/v) was titrated with 0.1 Normal (N) perchloric acid in acetic acid on a Metrohm 665 Dosimat titrator (Brinkmann). Titration of a blank consisting of dichloromethane (15 mL) and tetraethylammonium bromide solution in acetic acid (15 mL) provided correction for any solvent background. Percent epoxide and EEW were calculated using the following equations:

$$\%\ \text{Epoxide} = \frac{[(\text{mL titrated sample}) - (\text{mL titrated blank})]\ (0.4303)}{(\text{g sample titrated})}$$

$$\text{EEW} = 4303 / (\%\ \text{epoxide})$$

Differential Scanning Calorimetry (DSC)

For analysis (1) of curing of the thermosettable blends of a DGE with a curing agent and (2) of the $T_g$ of a cured sample, a DSC 2910 Modulated DSC (TA Instruments) was employed. A heating rate of 7 °C/min from 0 °C to 250 °C or 300 °C was used under a stream of nitrogen flowing at 35 cc/min. Each sample analyzed for curing was contained in an aluminum pan and loosely covered (not sealed) with an aluminum lid. Each cured sample for analysis of $T_g$ was contained in an open aluminum pan. The respective sample weight tested is given with the results obtained.

Thickness Measurement

Thickness was measured on dry coatings using a BYK MPOR USB coating thickness gauge. The gauge was zeroed on a bare panel (aluminum) before measuring coatings.

Pencil Hardness

Pencil hardness test was conducted according to ASTM D3363-06. The gauge hardness, the hardest pencil that will leave the film uncut, was reported.

Crosshatch Adhesion Test

The crosshatch adhesion was measured according to ASTM D3359-09. The "B" method was used for coatings less than 5 mils thick. In this test, a square lattice pattern was cut with a razor giving 10 cuts in each direction with 1 or 2 mm distance between neighboring cuts. Pressure-sensitive double coated paper tape (3M No. 410) was applied over the lattice and then removed away sharply in a direction perpendicular to the surface of the coated sample. The coating and tape were then visually inspected to see how much coating was removed from the substrate by the tape. Adhesion was evaluated according to the following scale:

5B - The edges of the cuts are completely smooth; none of the squares of the lattice are detached.
4B - Small flakes of the coating are detached at intersections; less than 5 % of the area is affected.
3B - Small flakes of the coating are detached along edges and at intersections of cuts. The area affected is 5 to 15 % of the lattice.
2B - The coating has flaked along the edges and on parts of the squares. The area affected is 15 to 35 % of the lattice.
1B - The coating has flaked along the edges of cuts in large ribbons, and whole squares have detached. The area affected is 35 to 65 % of the lattice.
0B - Flaking and detachment worse than Grade 1.

Methylethylketone (MEK) Double Rubs

The MEK double rub test was performed according to ASTM D5402-06 Method 3 with the modification of using a 32 ounce ball peen hammer and Grade 50 bleached cheesecloth. The cloth was fastened with a wire to the flat end of the hammer. The cloth was re-dipped into MEK every 25 double rubs. The cloth was repositioned to a fresh area or replaced after testing of each panel.

Wedge Bend Flexibility

The wedge bend test is carried out as follows. A tapered 180 degree bend in a panel is formed by first bending it to 180° with a radius of about 0.5 cm and coating on the outside of the bend. Then one side of the bend was completely flattened to a near zero radius with an impactor at 40 in.-lbs. The stressed surface was subjected to a tape pull and then rubbed with a solution of copper sulfate (mixture of 10 g of copper sulfate, 90 g of water and 3 g of sulfuric acid). Anywhere the coating had cracked, dark spots appeared indicating failure. The amount of coating failure (in mm) along the length of the wedge bend, which is 100 mm, was reported. Alternatively, the percentage of the failed length was recorded as "% failure".

Pot Life Measurement

Corresponding amount of curing agent and epoxy resin were measured and charged into a vial. After mixing in a speed mixer (Flack Tec. INC) at 3000 rpm for 2 min the sample was put on a viscometer. Viscosity was measured on a Brookfield TA AR2000 advanced viscometer using cone type # 60 at 25.0 °C, and the rotation rate set at 100 rpm.

Pot life was defined as the time that it took to double the initial viscosity.

Dry Time

The coating composition was made by mixing the curing agent and epoxy resin following a predetermined formulation with or without wetting agent. The coating was then drawn down onto a glass substrate. The set to touch dry time was measured by dragging a needle through the coating using a BYK Drying time recorder.

Mandrel Bend Flexibility Test

Mandrel bend tests were carried out according to ASTM D522-93a(2008) using test method B.

Chemical Resistance Test

Filter papers (15 mm diameter) were put on the cured coatings. A couple drops of various chemicals (brake oil, 10 % acetic acid in water, 10 % sulfuric acid, 10 % sodium hydroxide solution, 50 % ethanol and methyl ethyl ketone) were individually deposited onto a filter paper. Plastic caps were then placed to cover the filter papers containing the test chemical. Data were recorded after soaking for 24 hr. The readings of the results were based on ASTM D1308-02(2007).

Micro-indentation (Marten) Hardness

A Fischer H100SMC Micro Indenter (Fischer Technology) computer controlled, ultra-low load dynamic micro indentation system was used, in conjunction with WIN-HCU (Fischer Technology) control software to obtain the coating hardness. In this test, a Vickers indenter in the form of a straight diamond pyramid with a square base was pressed into the surface of the coating with an applied force of 5 mN (rate = 5 mN/20 sec). The maximum load was then held for 10 sec (creep step) followed by the releasing of the load (rate = 5 mN/20 sec). A final creep step of 10 sec completed the test cycle. By taking into account the geometry of the indenter and the penetration depth for the applied force, a universal hardness measurement (HU) was obtained. A higher HU number indicates higher coating hardness.

Dynamic Mechanical Analysis

Thin free standing films approximately 100 μm thick were prepared by premixing the corresponding amount of curing agent and epoxy resin in a speed mixer (Flack Tec. INC) at 3000 rpm for 3 min. The formulation was then drawn down onto a PTFE peel paper. The free film was easily peeled off from PTFE peel paper after fully cured. The sample for DMA was prepared by cutting a 15 mm by 5 mm rectangle from the film. For DMA analysis a TA instruments Q100 DMA system with a temperature cycle from 20 °C to 150 °C with a temperature ramp rate of 5 °C/min at a frequency of 1 Hz was used. The crosslink density was calculated using the storage modulus values well above $T_g$ in the rubbery plateau region using a simplified equation of kinetic theory of rubber elasticity

$$E' = 3\nu_e RT$$

where E' is the storage modulus (Pa) at the rubber plateau, $\nu_e$ is the crosslink density (mol/L), R is the gas constant (8.3 J/K/mol), and T is the temperature in Kelvin (K). $T_{g1}$ is the glass transition temperature of the first DMA temperature cycle and $T_{g2}$ is the glass transition obtained from the second temperature cycle. Crosslink density 1 and crosslink density 2 were calculated for the first and second temperature cycles, respectively.

Preparative Example 1: Synthesis of epoxy resin and diglycidyl ether of cis- and trans-2,2,4,4-tetramethyclobutane-1,3-diol (TMCBD)

Epoxidation of TMCBD was performed using four stages of aqueous sodium hydroxide addition to give TMCBD epoxy resin. TMCBD DGE was isolated from the epoxy resin by fractional vacuum distillation.

A. Epoxidation of TMCBD

Stage 1

A 5 L, 4 neck, glass, round bottom reactor was charged with TMCBD (432.63 g, 3.0 mol, 6.0 hydroxyl eq), epichlorohydrin (1110.24 g, 12.0 mol, 2:1 epichlorohydrin:TMCBD hydroxyl eq ratio), toluene (1.5 L), and benzyltriethylammonium chloride (43.62 g, 0.192 mole) in the indicated order. The TMCBD was a commercial grade product from Eastman Chemical. GC analysis of an aliquot of the TMCBD after normalization to remove solvent (acetonitrile) revealed the presence of the two isomeric components at 45.3 and 54.7 area %. The reactor was additionally equipped with a condenser (maintained at 0 °C), a thermometer, a Claisen adaptor, an overhead nitrogen inlet (1 LPM $N_2$ used), and a stirrer assembly (PTFE paddle, glass shaft, variable speed motor). A controller monitored the temperature registered on the thermometer in the reactor and provided heating via the heating mantle placed under the reactor as well as cooling delivered by a pair of fans positioned on the reactor exterior. Sodium hydroxide (360.0 g, 9.0 moles) dissolved in DI water (360 g) for the initial addition was added to a side arm vented addition funnel, sealed with a ground glass stopper, then attached to the reactor. Stirring commenced to give a 23 °C mixture followed by commencement of dropwise addition of the aqueous sodium hydroxide solution. The reaction mixture was allowed to self-heat during the aqueous sodium hydroxide addition time. After 217 min, 68.75 % of the aqueous sodium hydroxide was added causing the reaction temperature to reach a maximum of 30 °C and then remain at that temperature for the next 30 min. Addition of the aqueous sodium hydroxide required a total of 270 minutes. The reaction temperature had declined to 29 °C at the end of the aqueous sodium hydroxide addition and the product was a cloudy biphasic mixture additionally containing precipitated solids. After 14.57 hr of postreaction, the temperature had declined to 26 °C and a sample was removed for GC analysis. GC analysis after normalization to remove solvents (acetonitrile and toluene) and unreacted epichlorohydrin revealed the presence of 7.99 area % light components, 9.63 area % unreacted TMCBD; 21.86 area % monoglycidyl ethers, 0.18 area % of a pair of components associated with the diglycidyl ether peaks, 54.53 area % diglycidyl ethers, and 5.81 area % oligomers that were volatile under the conditions of the GC analysis. (The sample for GC analysis was inhomogeneous with respect to precipitated TMCBD reactant present in the reaction mixture and thus understates the amount of this reactant.) After a cumulative 14.72 hr of postreaction, DI water (1 L) was added to the stirred reactor causing an exotherm to 27 °C. Stirring ceased after 30 min and the reactor contents were allowed to settle. A layer of crystalline solid was noted between the organic and aqueous layers. The bulk of the organic layer was decanted from the reactor followed by vacuum filtration of the remaining organic layer, precipitated solid and aqueous layer through a fritted glass funnel. The filtrate was added to a separatory funnel then the organic layer was recovered and the aqueous layer discarded. A total of 80.43 g of damp, white crystalline solid was recovered on the fritted glass funnel. GC analysis of an aliquot of the solid revealed it to be unreacted TMCBD.

Stage 2

The combined organic layer and unreacted TMCBD from Stage 1 were reloaded into the reactor along with fresh benzyltriethylammonium chloride (21.81 g, 0.1915 mol). Sodium hydroxide (180 g, 4.5 mol) dissolved in DI water (180 g) was added to a side arm vented addition funnel, sealed with a ground glass stopper, then attached to the reactor. Stirring commenced to give a 25 °C mixture followed by commencement of dropwise addition of the aqueous sodium hydroxide solution. The reaction mixture was allowed to self-heat during the aqueous sodium hydroxide addition time. Thus, after 90 min, 75.0 % of the aqueous sodium hydroxide was added causing the reaction temperature to reach a maximum of 30 °C. Addition of the aqueous sodium hydroxide required a total of 115 minutes. The reaction temperature had declined to 28.5 °C at the end of the aqueous sodium hydroxide addition and the product was a cloudy biphasic mixture additionally containing precipitated solids. After 16.17 hr of postreaction the temperature had declined to 26 °C and a sample was removed for GC analysis. GC analysis after normalization to remove solvents (acetonitrile and toluene) and unreacted epichlorohydrin revealed the presence of 6.46 area % light components, 3.77 area % unreacted TMCBD; 12.16 area % monoglycidyl ethers, 0.19 area % of a pair of components associated with the diglycidyl ether peaks, 69.09 area % diglycidyl ethers, and 8.33 area % oligomers that were volatile under the conditions of the GC analysis (note: the sample for GC analysis was inhomogeneous with respect to precipitated TMCBD reactant present in the reaction mixture and thus understates the amount of this reactant). After a cumulative 16.33 hr of postreaction, DI water (455 mL) was added to the stirred reactor causing an exotherm to 27.5 °C. Stirring ceased after 30 min and the reactor contents were allowed to settle. A layer of crystalline solid was noted between the organic and aqueous layers. The bulk of the organic layer was decanted from the reactor followed by vacuum filtration of the remaining organic layer, precipitated solid and aqueous layer through a fritted glass funnel. The filtrate was added to a separatory funnel then the organic layer was recovered and the aqueous layer discarded. A total of 30.17 g of damp, white crystalline solid was recovered on the fritted glass funnel. GC analysis of an aliquot of the solid revealed it to be unreacted TMCBD.

Stage 3

The combined organic layer and unreacted TMCBD from Stage 2 were reloaded into the reactor along with fresh benzyltriethylammonium chloride (10.91 g, 0.0479 mole). Sodium hydroxide (90 g, 2.25 mol) dissolved in DI water (90 g) was added to a side arm vented addition funnel, sealed with a ground glass stopper, then attached to the reactor. Stirring commenced to give a 25 °C mixture followed by commencement of dropwise addition of the aqueous sodium hydroxide solution. The reaction mixture was allowed to self-heat during the aqueous sodium hydroxide addition time. Thus, after 13 min, 21.85 % of the aqueous sodium hydroxide was added causing the reaction temperature to reach a maximum of 27 °C and remain at this temperature for the duration of the aqueous sodium hydroxide addition. Addition of the aqueous sodium hydroxide required a total of 70 min. The product was a cloudy biphasic mixture additionally containing precipitated solids at the end of the aqueous sodium hydroxide addition. After 16.95 hr of postreaction the temperature had declined to 25 °C and a sample was removed for GC analysis. GC analysis after normalization to remove solvents (acetonitrile and toluene) and unreacted epichlorohydrin revealed the presence of 7.14 area % light components, 3.03 area % unreacted TMCBD; 8.16 area % monoglycidyl ethers, 0.16 area % of a pair of components associated with the diglycidyl ether peaks, 72.41 area % diglycidyl ethers, and 9.10 area % oligomers that were volatile under the conditions of the GC analysis (note: the sample for GC analysis was inhomogeneous with respect to precipitated TMCBD reactant present in the reaction mixture and thus understates the amount of this reactant). After a cumulative 17.00 hr of postreaction, DI water (185 mL) was added to the stirred reactor causing an exotherm to 27 °C. Stirring ceased after 30 min and the reactor contents were allowed to settle. A layer of crystalline solid was noted between the organic and aqueous layers. The bulk of the organic layer was decanted from the reactor followed by vacuum filtration of the remaining organic layer, precipitated solid and aqueous layer through a fritted glass funnel. The filtrate was added to a separatory funnel then the organic layer was recovered and the aqueous layer discarded. A total of 8.19 g of damp, white crystalline solid was recovered on the fritted glass funnel. GC analysis of an aliquot of the solid revealed it to be unreacted TMCBD.

Stage 4

The combined organic layer and unreacted TMCBD from Stage 3 were reloaded into the reactor along with fresh benzyltriethylammonium chloride (10.91 g, 0.0479 mole). Sodium hydroxide (90 g, 2.25 moles) dissolved in DI water (90 g) was added to a side arm vented addition funnel, sealed with a ground glass stopper, then attached to the reactor. Stirring commenced to give a 24 °C mixture followed by commencement of dropwise addition of the aqueous sodium hydroxide solution. The reaction mixture was allowed to self-heat during the aqueous sodium hydroxide addition time. Thus, after 35 min, 58.33 % of the aqueous sodium hydroxide was added causing the reaction temperature to reach a maximum of 26 °C and remain at this temperature for the duration of the aqueous sodium hydroxide addition. Addition of the aqueous sodium hydroxide required a total of 67 minutes. The product was a cloudy biphasic mixture at the end of the aqueous sodium hydroxide addition. After 20.63 hr of postreaction the temperature had declined to 25 °C and a sample was removed for GC analysis. GC analysis after normalization to remove solvents (acetonitrile and toluene) and unreacted epichlorohydrin revealed the presence of 7.91 area % light components, 1.19 area % unreacted TMCBD; 4.72 area % monoglycidyl ethers, 0.17 area % of a pair of components associated with the diglycidyl ether peaks, 74.45 area % diglycidyl ethers, and 11.56 area % oligomers that were volatile under the conditions of the GC analysis. After a cumulative 20.71 hr of postreaction, DI water (185 mL) was added to the stirred reactor causing an exotherm to 27 °C. Stirring ceased after 30 min and the reactor contents were allowed to settle. (Crystalline solid was no longer observed between the organic and aqueous layers.) The organic layer was decanted from the reactor into a pair of 2 L separatory funnel and the aqueous layer remaining in the reactor discarded along with a minor amount of aqueous layer removed from the separatory funnels.

B. Epoxy Resin Isolation

The organic layer equally split between the pair of separatory funnels was washed with DI water (400 mL per separatory funnel) by vigorously shaking. The washed product was allowed to settle for 4 hr, then the aqueous layer was removed and discarded as waste. A second wash was completed using the aforementioned method, with settling overnight (20 hr). The combined, hazy organic solution was vacuum filtered through a bed of anhydrous, granular sodium sulfate in a 600 mL fritted glass funnel providing a transparent filtrate. Toluene was used to wash epoxy resin product entrained in the sodium sulfate into the filtrate.

Rotary evaporation of the filtrate using a maximum oil bath temperature of 65 °C to a final vacuum of 5.6 mm of Hg removed the bulk of the volatiles. A total of 770.66 g of yellow orange, transparent liquid was recovered after completion of the rotary evaporation. GC analysis after normalization to remove solvent (acetonitrile) revealed the presence of 4.69 area % "lights" (2 peaks with retention times between the diol starting reactant and monoglycidyl ether),

4.47 area % monoglycidyl ethers, 0.17 area % of a pair of components associated with the diglycidyl ether peaks, 76.61 area % diglycidyl ethers, and 14.06 area % oligomers that were volatile under the conditions of the GC analysis. GC analysis revealed that essentially all unreacted epichlorohydrin, toluene, and unreacted diol had been removed. The TMCBD epoxy resin had an I.C.I. cone and plate viscosity of 23.3 cP, as shown in Table 6.

C. Fractional Vacuum Distillation

A portion (765.08 g) of the residue from the rotary evaporation was added to a 1 L, 3 neck, glass, round bottom reactor equipped with magnetic stirring and a thermometer for monitoring the pot temperature. A one piece integral vacuum jacketed Vigreux distillation column with distillation head was attached to a second section of vacuum jacketed Vigreux distillation column through the respective 24/40 joints on both columns. The coupled pair of distillation columns was then attached to the reactor. Each of the distillation columns nominally provided 9 to 18 theoretical plates depending on the mode of operation. The distillation head was equipped with an overhead thermometer, air cooled condenser, a receiver and a vacuum takeoff. A vacuum pump was employed along with a liquid nitrogen trap and an in-line digital thermal conductivity vacuum gauge. Stirring commenced followed by application of full vacuum then progressively increased heating using a thermostatically controlled heating mantle. A clean receiver was used to collect each respective distillation cut. During the distillation, the initial distillation cuts were taken to sequentially remove all components boiling below the monoglycidyl ethers of TMCBD, then the bulk of the monoglycidyl ethers. The final distillation cuts sought to selectively remove the diglycidyl ethers, leaving the oligomeric product (143.38 g) in the distillation pot. GC analysis revealed that the oligomers contained a residual 0.1 area % monoglycidyl ether, 25.3 area % diglycidyl ether, with the balance as the oligomers. After normalization to remove the peaks associated with acetonitrile and the diglycidyl ether, the GC analysis demonstrated the oligomeric components containing multiple isomers as shown in Table 2 where the structures are based on molecular weight data obtained from chemical ionization gas chromatographic-mass spectroscopic analysis.

Table 2

| Component | GC Area % |
|---|---|
| 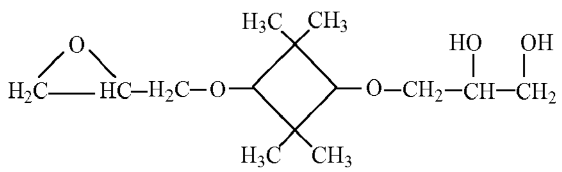<br>(plus a minor amount of other non-chloro and monochloro isomeric compounds) | 5.48 |
| 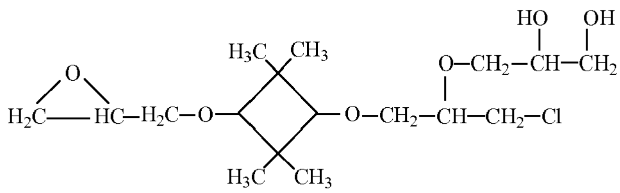<br>and<br>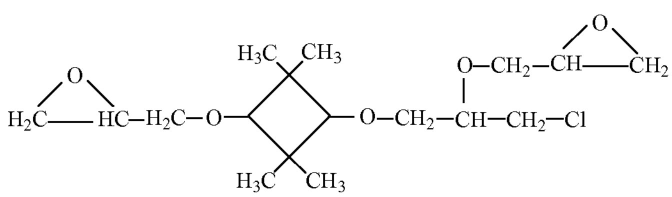<br>and<br>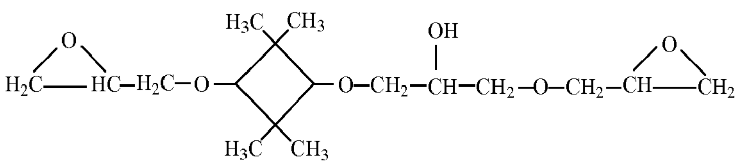<br>(plus a minor amount of other non-chloro isomeric compounds) | 5.59 |

(continued)

| Component | GC Area % |
|---|---|
| 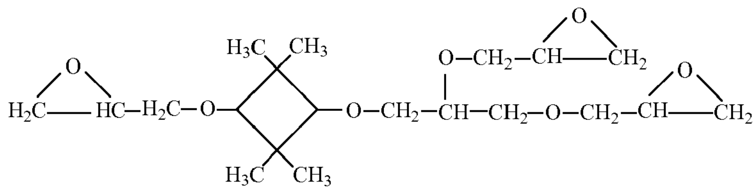 (plus a minor amount of monochloro isomeric compounds) | 33.90 |
| 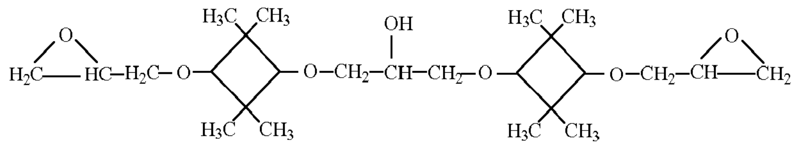 | 12.44 |
| 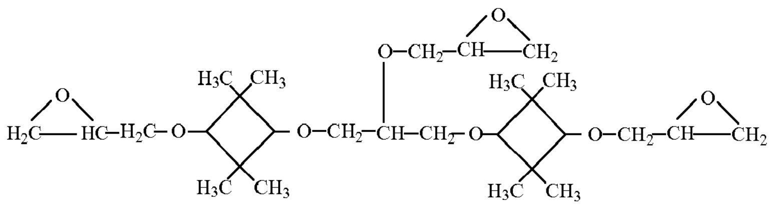 | 42.59 |

A master batch was prepared by combining various distillation cuts to give 448.24 g of TMCBD DGE. GC analysis revealed 99.61 area % diglycidyl ethers of TMCBD and 0.23 area % monoglycidyl ethers of TMCBD, with the balance (0.15 area %) being a minor peak associated with the isomeric diglycidyl ethers. The EEW of the TMCBD DGE was 130.07 as determined by titration. The oxirane oxygen content of the TMCBD DGE was 12.30 weight %, which is 98.56 % of theoretical. The theoretical oxirane oxygen content for 100 % TMCBD DGE is 12.48 %. The I.C.I. cone and plate viscosity of the TMCBD DGE was 14.5 cP. Total chlorine for the TMCBD DGE was 59 $\pm$ 2 ppm as determined via neutron activation analysis. Hydrolyzable chloride was 3.55 $\mu$g/g $\pm$10 % as determined by titration.

Preparative Example 2: Repeat synthesis of the epoxy resin and diglycidyl ether of TMCBD

The procedure of Example 1 was repeated, including the four-stage epoxidation of TMCBD (A), epoxy resin isolation (B), and fractional vacuum distillation (C). The resulting epoxy resin contained 99.72 area % diglycidyl ethers of TMCBD and 0.07 area % monoglycidyl ethers of TMCBD, with the balance (0.21 area %) being a minor peak associated with isomeric diglycidyl ethers. The EEW was 129.93, as determined by titration. The oxirane oxygen content was 12.31 %, which is 98.64 % of theoretical. The I.C.I. cone and plate viscosity was 14.5 cP.

Comparative Examples 1-5: Synthesis and characterization of the epoxy resin and diglycidyl ether of isomeric cyclohexanedimethanols (CHDM)

For each of Comparative Examples 1-5, the epoxidation of CHDM was performed in the same manner as the epoxidation of TMCBD in Example 1, except that CHDM was used in place of TMCBD to prepare the epoxy resin. In Comparative Examples 4-5, CHDM DGE was isolated from the epoxy resin by fractional vacuum distillation.

Comparative Example 1: First example of epoxy resin of cis- and trans-1,4-CHDM

The results of GC analysis of the epoxy resin of cis- and trans-1,4-CHDM of Comparative Example 1 after isolation step (B) are summarized in Table 3. The I.C.I. cone and plate viscosity was 62.5 cP.

Table 3

| Component | Area % |
|---|---|
| Lights | 0.03 |
| CHDM Monoglycidyl Ethers | 4.40 |

(continued)

| Component | Area % |
|---|---|
| CHDM Diglycidyl Ethers | 76.61 |
| Minor peaks associated with mono and diglycidyl ether peaks | 0.14 |
| 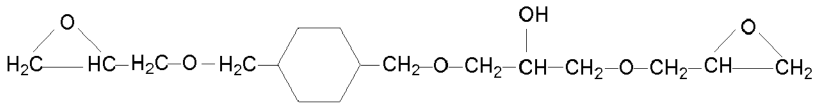 and 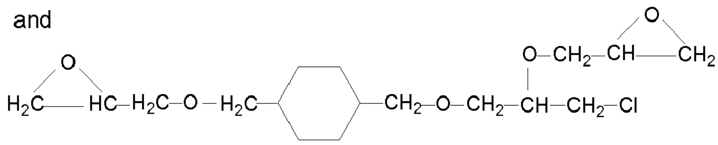 | 0.91 |
| 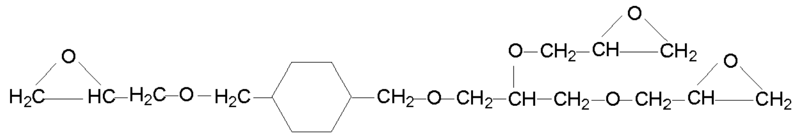 | 3.51 |
| 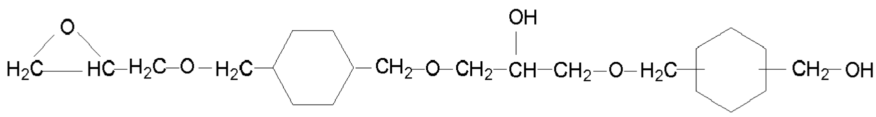 | 0.04 |
| 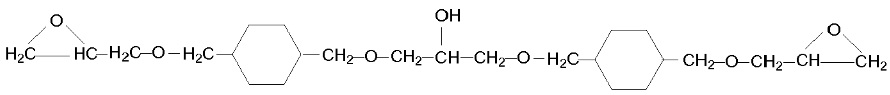 | 1.92 |
| 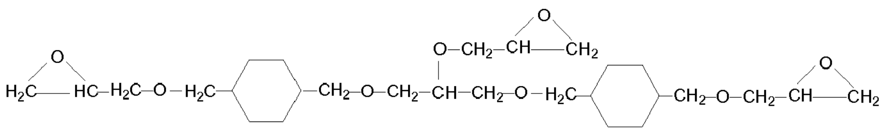 | 12.44 |

Comparative Example 2: Second example of epoxy resin of cis- and trans-1,4-CHDM

The results of GC analysis of the epoxy resin of cis- and trans-1,4-CHDM of Comparative Example 2 after isolation step (B) are summarized in Table 4. The I.C.I. cone and plate viscosity was 60.5 cP.

Table 4

| Component | Area % |
|---|---|
| Lights | 0.05 |
| CHDM Monoglycidyl Ethers | 5.73 |
| CHDM Diglycidyl Ethers | 79.60 |
| Minor peaks associated with mono and diglycidyl ether peaks | 0.14 |
| 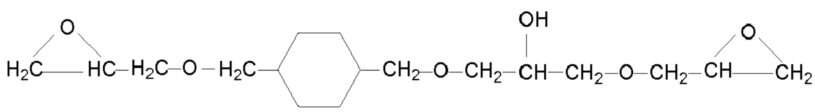 and 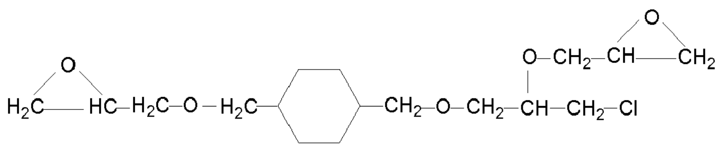 | 0.77 |

(continued)

| Component | Area % |
|---|---|
| 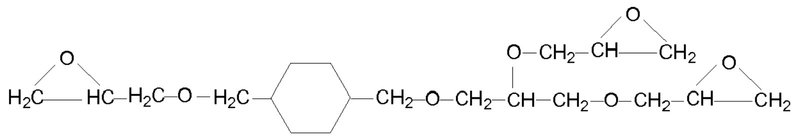 | 2.39 |
| 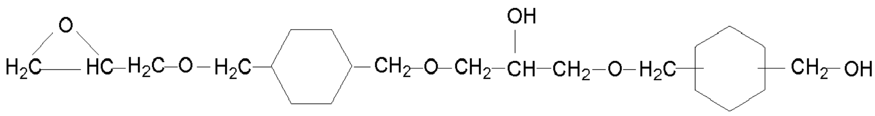 | 0.40 |
| 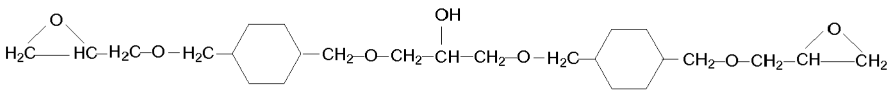 | 1.84 |
| 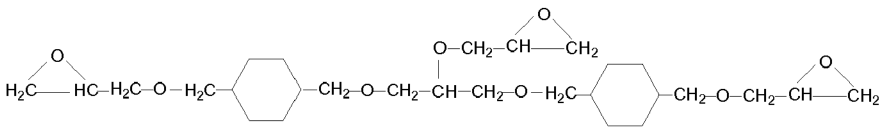 | 9.08 |

<u>Comparative Example 3: Third example of epoxy resin of cis- and trans-1,4-CHDM</u>

The results of GC analysis of the epoxy resin of cis- and trans-1,4-CHDM of Comparative Example 3 after isolation step (B) are summarized in Table 5. The I.C.I. cone and plate viscosity was 61.5 cP.

Table 5

| Component | Area % |
|---|---|
| Lights | 0.07 |
| Monoglycidyl Ethers | 5.71 |
| Diglycidyl Ethers | 77.33 |
| Minor peaks associated with mono and diglycidyl ether peaks | 0.14 |
| 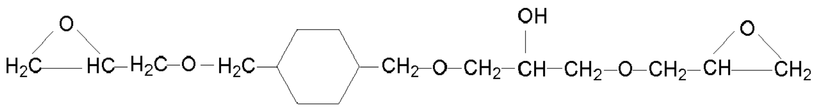 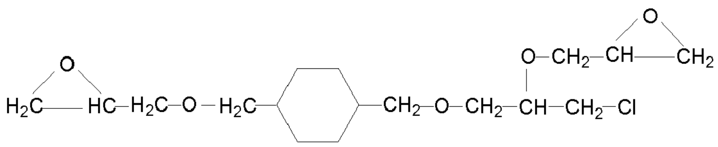 | 1.04 |
| 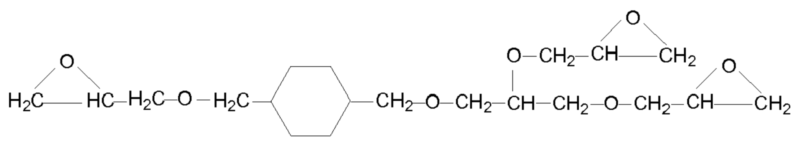 | 3.30 |
| 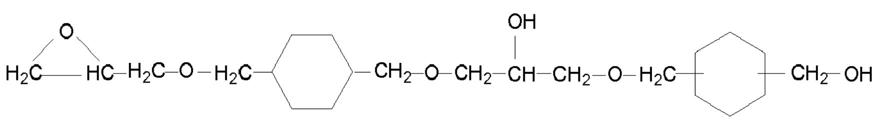 | 0.77 |
| 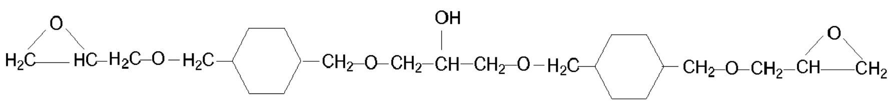 | 1.89 |

(continued)

| Component | Area % |
| --- | --- |
| 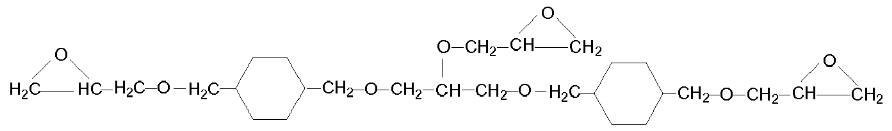 | 9.75 |

Comparative Example 4: Viscosity of diglycidyl ether of cis- and trans-1,3- and 1,4-cyclohexanedimethanol (CHDM DGE)

In this example, CHDM DGE was isolated from the epoxy resin of CHDM by fractional vacuum distillation. GC analysis of the cis- and trans-1,3- and 1,4-CHDM DGE revealed 99.60 area % diglycidyl ethers of CHDM, 0.14 area % monoglycidyl ethers of CHDM with the balance (0.26 area %) present as two minor peaks associated with isomeric diglycidyl ethers. The EEW was 128.73 as determined by titration. The I.C.I. cone and plate viscosity was 29 cP.

Comparative Example 5: Viscosity of cis- and trans-1,4-CHDM DGE

Cis- and trans-1,4-CHDM DGE was isolated from the epoxy resin of cis- and trans-1,4-CHDM by fractional vacuum distillation as in Comparative Example 4. GC analysis revealed 99.67 area % diglycidyl ethers of CHDM, with the balance (0.33 area %) present as three minor peaks associated with isomeric diglycidyl ethers. The I.C.I. cone and plate viscosity was 27.5 cP.

The diglycidyl ether content and I.C.I. cone and plate viscosities of Examples 1 and 2 and Comparative Examples 1-5 are summarized in Table 6. As can be seen from Table 6, the epoxy resin of TMCBD obtained in isolation step (B) has a significantly lower viscosity than the epoxy resin of CHDM obtained in isolation step (B). Moreover purified TMCBD DGE obtained in fractional vacuum distillation step (C) has a significantly lower viscosity than purified CHDM DGE obtained in fractional vacuum distillation step (C) at approximately the same product purity (99.6+ area %).

Table 6

| Example | 1 | 1 | 2 | - | - | - | - | - |
| --- | --- | --- | --- | --- | --- | --- | --- | --- |
| Comparative Example | - | - | - | 1 | 2 | 3 | 4 | 5 |
| Step | B | C | C | B | B | B | C | C |
| TMCBD DGE purity (area %) | 76.61 | 99.61 | 99.72 | - | - | - | - | - |
| CHDM DGE purity (area %) | - | - | - | 76.61 | 79.60 | 77.33 | 99.60 | 99.67 |
| I.C.I. viscosity (cP) | 23.3 | 14.5 | 14.5 | 62.5 | 60.5 | 60.5 | 29.0 | 27.5 |

Examples 1 and 2 and Comparative Examples 1-5 also show that when TMCBD was epoxidized via reaction with epichlorohydrin in an aqueous epoxidation process, greater selectivity toward the diglycidyl ether was obtained than in the corresponding aqueous epoxidation of CHDM. This is surprising given that TMCBD is a secondary diol while CHDM is a primary diol. The secondary hydroxyl groups of TMCBD are expected to be less reactive toward coupling with epichlorohydrin than the primary hydroxyl groups of CHDM. Furthermore, because secondary hydroxyl groups are generated from the reaction with epihalohydrin to form chlorohydrin intermediates, competition is expected between reaction of epihalohydrin with the secondary hydroxyl group of said chlorohydrin and the secondary hydroxyl group on the cyclobutane ring. Such competition would lead to chloromethyl-containing oligomers at the expense of the desired TMCBD DGE. Surprisingly, only minor amounts of chloromethyl-containing oligomers are detected in the epoxy resin of TMCBD.

Comparative Example 6: Lewis acid-catalyzed epoxidation cis- and trans-1,4-CHDM

A commercial grade of an epoxy resin of CHDM (ERISYS™ GE-22S, available from CVC Thermoset Specialties, Moorestown, NJ) produced via Lewis acid-catalyzed epoxidation of cis- and trans-1,4-CHDM was analyzed by GC-MS, and the following oligomeric components, i.e. components having a higher retention time in the GC-MS analysis than CHDM DGE, were identified:

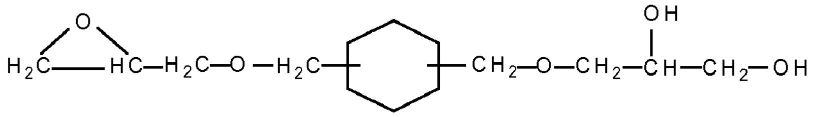

7

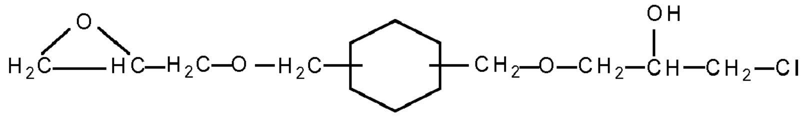

8

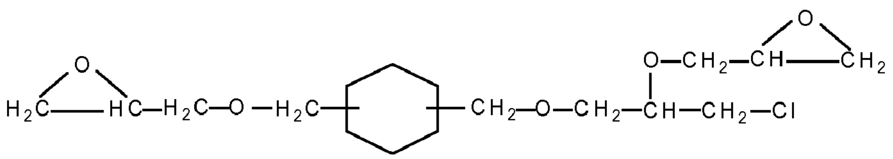

9

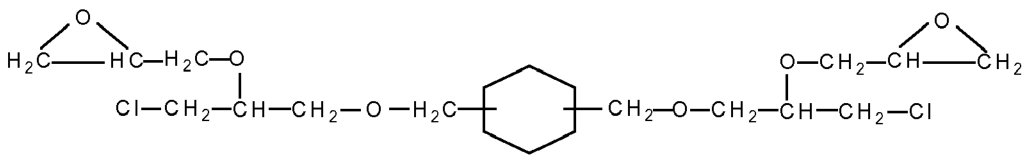

10

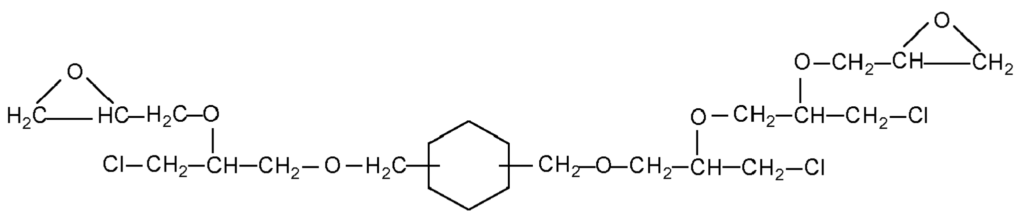

11

The chloromethyl-containing diglycidyl ether of Formula 9 was present in an amount of greater than 80 area %. It is clear from the chemical structures of the components of Formulae 7-11 that the Lewis acid catalyzed epoxidation produces a very different reaction product than that obtained by phase transfer catalyzed epoxidation. None of the components of Formulae 7-11 are found in the epoxy resin from phase transfer catalyzed epoxidation of cyclohexanedimethanols, as characterized by Tables 1-4. It is also noted that unlike the epoxy resin obtained by phase transfer catalyzed epoxidation, which contains triglycidyl ethers, the highest glycidyl ether group functionality of the epoxy resin obtained by Lewis acid catalyzed epoxidation is two (diglycidyl ethers).

The Lewis acid catalyzed epoxidation also produced a large amount of by-products containing bound chlorine in the form of chloromethyl groups. Each of the components of Formulae 8-11 have chlorine bound in the form of chloromethyl groups. The presence of the component of Formula 8, a monoglycidyl ether monochlorohydrin, indicates that further treatment with aqueous sodium hydroxide is needed to complete the dehydrochlorination step of the epoxidation. The presence of bound chloride precludes the use of this epoxy resin from many applications including electronics and coatings used in contact with food.

Example 1: Advancement of diglycidyl ether of 2,2,4,4-tetramethylclobutane-1,3-diol with catechol

A mixture of catechol (24.00 g), DGE of TMCBD (58.69 g), and diglyme (82.69 g) was stirred and heated to 133 °C in a 500 mL 4-neck flask equipped with a condenser, nitrogen purge, and mechanical stirrer. Tetraphenylphosphonium acetate (0.494 g) was charged to the flask at 133 °C, and the resulting mixture was further heated to 165 °C. The advancement reaction was monitored by epoxide titration. The reaction was stopped after 3.0 hours when 97.5% of the starting epoxide had reacted. The advanced epoxy resin was precipitated from solution by addition to a 500 mL mixture of methanol and ice (1:1 by volume) in a plastic container with mechanical agitation. The precipitate was collected by filtration, washed with a methanol/ice mixture three times (300 mL per wash), and dried in a vacuum oven at 60 °C for 24 hours. The resulting advanced epoxy resin was a light-yellow clear solid obtained in 85 % yield. DSC analysis revealed a $T_g$ of 42.3 °C. The EEW was 8691, the weight average molecular weight was 66,058 g/mol; the polydispersity was 3.84, the hydroxyl number was 285 mg KOH/g, and the melt viscosity at 150 °C was 135,000 cP.

Comparative Example 7: Advancement of diglycidyl ether of cis- and trans-1,4-cyclohexanedimethanol with catechol

A mixture of catechol (12.2 g), DGE of cis- and trans-1,4-CHDM (30.0 g), and diglyme (129.3 g) was stirred and heated to 140 °C in a 250 mL, 3-necked flask equipped with a condenser, nitrogen purge, and mechanical stirrer. Tetraphenylphosphonium acetate (0.9 g) was charged to the flask at 140 °C, and the resulting mixture was further heated to 163 °C. The advancement reaction was monitored by epoxide titration. The reaction was stopped after 13.0 hours when 98.9 % of the epoxide had reacted. The advanced epoxy resin was precipitated from solution by addition to a 750 mL mixture of methanol and ice (1:1 by volume) in a plastic container with mechanical agitation. The resulting advanced epoxy resin was collected by filtration, washed with a methanol/ice mixture three times (300 mL per wash), and dried in a vacuum oven at 60 °C for 24 hours. The resulting advanced epoxy resin was a light-yellow clear solid. DSC analysis revealed a $T_g$ of 31 °C. The weight average molecular weight was 27,950 g/mole.

Examples 2a-d: Preparation and curing of coating compositions comprising the advanced

epoxy resin of Example 1

Four coatings were prepared and tested as follows. Konig hardness, crosshatch adhesion, lactic acid retort, MEK double rub, pencil hardness, and wedgebend results are shown in Table 7.

Example 2a

A mixture of catechol advanced DGE of TMCBD from Example 1 (3.97 g), METHYLON 75108 (0.5 g), a 10 % aqueous solution of phosphoric acid (0.19 g), BYK-310 (0.045 g), and a mixture of the monobutyl ether of ethylene glycol and cyclohexanone (80:20 by weight, 15.3 g) was agitated overnight to form a clear solution. The solution was filtered through a 1 μm syringe filter and then coated on electrolytical tin plate (ETP) panels with a #22 wire wound rod drawdown bar. The coated panels were dried and cured in an oven at 205 °C for 10 min. The thickness of the cured coating was 5.8 μm.

Example 2b

A mixture of catechol advanced DGE of TMCBD from Example 1 (3.98 g), a phenolic crosslinker METHYLON 75108 (0.5 g), a 10 % aqueous solution of phosphoric acid (0.09 g), BYK-310 (0.045 g), and a mixture of the monobutyl ethylene glycol ether and cyclohexanone mixture (80:20 by wt, 15.4 g) was agitated overnight to form a clear solution. The solution was filtered, coated, and cured using the method of Example 2a. The thickness of the cured coating was 6.6 μm.

Example 2c

A mixture of catechol advanced DGE of TMCBD from Example 1 (3.99 g), a phenolic crosslinker METHYLON 75108 (0.5 g), a 10 % aqueous solution of phosphoric acid (0.05 g), BYK-310 (0.02 g), and a mixture of the monobutyl ethylene glycol ether and cyclohexanone mixture (80:20 by wt, 15.4 g) was agitated overnight to form a clear solution. The solution was filtered, coated, and cured using the method of Example 2a. The thickness of the cured coating was 5.6 μm.

Example 2d

A mixture of catechol advanced DGE of TMCBD from Example 1- (3.97 g), a phenolic crosslinker METHYLON 75108 (0.5 g), a 10 % aqueous solution of phosphoric acid (0.22 g), BYK-310 (0.02 g), and a mixture of the monobutyl ethylene glycol ether and cyclohexanone mixture (80:20 by wt, 15.3 g) was agitated overnight to form a clear solution. The solution was filtered, coated, and cured using the method of Example 2a. The thickness of the cured coating was 6.4 μm.

The properties of the coatings of Examples 2a-d are provided in Table 7. The favorable wedge bend flexibility test results indicate that the cured advanced epoxy resins are more flexible than known cured high molecular weight epoxy resins.

Table 7

| Example | 2a | 2b | 2c | 2d |
|---|---|---|---|---|
| Coating thickness ($\mu$m) | 5.8 | 6.6 | 5.6 | 6.4 |
| Konig hardness (s) | 187 | 185 | 185 | 189 |
| Crosshatch adhesion | 5B | 5B | 5B | 5B |
| MEK double rubs | 175 | 35 | 25 | 200 |
| Pencil hardness | F | B | F | HB |
| Wedge bend (% failure) | 0 | 0 | 0 | 0 |

## Claims

1. An advanced epoxy resin comprising the reaction product of:

   an epoxy resin comprising a diglycidyl ether of Formula 1

   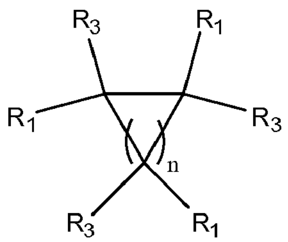
   1

   wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the diglycidyl ether has two glycidyl ether groups; and
   at least one difunctional compound selected from an aromatic diol and a dicarboxylic acid.

2. The advanced epoxy resin of Claim 1, wherein:

   i) each glycidyl ether group independently has the Formula 2

   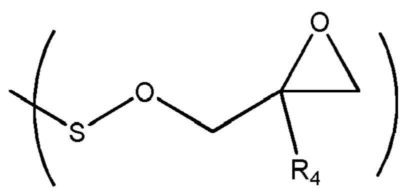
   2

   wherein $R_4$ is hydrogen or $C_{1-4}$ alkyl, and S is a direct bond, $C_{1-12}$ alkylene, or $C_{624}$ arylene; and/or
   ii) the epoxy resin has an oxirane oxygen content of greater than or equal to 90 % of theoretical for the diglycidyl ether; and/or
   iii) the epoxy resin has a total chlorine content of less than or equal to 2 weight %.

3. The advanced epoxy resin of Claim 1, wherein the diglycidyl ether comprises cis- and trans-2,2,4,4-tetramethylcyclobutane-1,3-diglycidyl ether; and wherein preferably the epoxy resin has an oxirane oxygen content of greater than or equal to 11.2 weight % and an epoxide equivalent weight of less than or equal to 142.5.

4. The advanced epoxy resin of Claim 1, wherein the difunctional compound comprises an aromatic diol of Formula 6

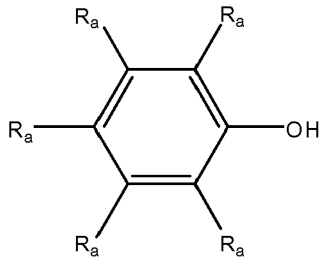 6

wherein one of the $R_a$ groups is a hydroxyl group and the four remaining $R_a$ groups are each independently hydrogen, an alkyl, cycloalkyl, an aryl, an aralkyl, a halogen, a nitro, a blocked isocyanate, or an alkyloxy group; or wherein any two of the remaining $R_a$ groups form a fused aliphatic or aromatic ring;
such as wherein the aromatic diol preferably comprises catechol, a substituted catechol, resorcinol, a substituted resorcinol, hydroquinone, a substituted hydroquinone, a naphthalene diol, a substituted naphthalene diol, or a combination comprising at least one of the foregoing aromatic diols.

**5.** The advanced epoxy resin of Claim 1, wherein the aromatic diol comprises an aromatic diol of Formula 7

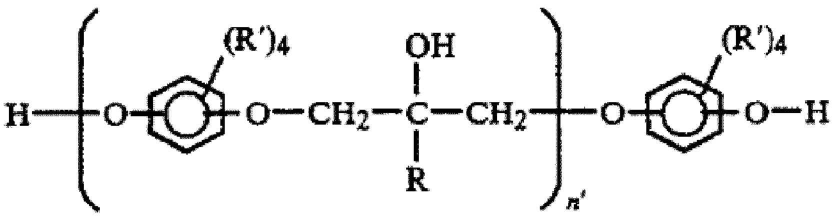 7,

an aromatic diol of Formula 8

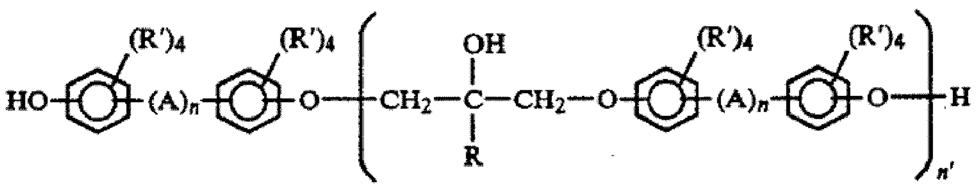 8,

or a combination comprising one or more of the foregoing aromatic diols,
wherein in Formulae 7 and 8, A is a divalent hydrocarbyl group having 1 to 12 carbon atoms, -S-, -S-S-, $-SO_2-$ -SO-, -CO-, or -O-; each R independently is hydrogen or a hydrocarbyl group having 1 to 4 carbon atoms; each R' independently is hydrogen, a hydrocarbyl or hydrocarbyloxy group having 1 to 4 carbon atoms, or a halogen; n has a value of zero or 1; and n' has a value of zero to 10;
such as wherein the aromatic diol of Formula 8 preferably comprises bisphenol A, a substituted bisphenol A, bisphenol F, a substituted bisphenol F, bisphenol S, a substituted bisphenol S, bisphenol K, a substituted bisphenol K, phenolphthalein, a substituted phenolphthalein, or a combination comprising at least one of the foregoing aromatic diols.

**6.** The advanced epoxy resin of Claim 1, wherein the difunctional compound comprises a dicarboxylic acid comprising phthalic acid, a substituted phthalic acid, isophthalic acid, terephthalic acid, a naphthalene dicarboxylic acid, succinic acid, adipic acid, maleic acid, fumaric acid, dodecanedioic acid, dimer acid, cyclohexanedicarboxylic acid, or a combination comprising at least one of the foregoing dicarboxylic acids.

**7.** The advanced epoxy resin of Claim 1, wherein the advanced epoxy resin is made water-dispersible by: (a) adding water-dispersible acrylic or polyester resins; (b) reacting the advanced epoxy resin with a water-dispersible acrylic or polyester resins; (c) grafting the advanced epoxy resin with at least one ethylenically unsaturated acid monomer; (d) grafting the advanced epoxy resin with at least one ethylenically unsaturated acid monomer and at least one nonionic ethylenically unsaturated monomer; or (e) reacting the advanced epoxy resin with phosphoric acid and

water, and at least partially neutralizing the reaction product of (a), (b), (c), (d), or (e) with a base.

**8.** The advanced epoxy resin of Claim 1 or 6, wherein the advanced epoxy resin is made water-dispersible by: (a) incorporating an ethylenically unsaturated dicarboxylic acid into the backbone; (b) grafting the advanced epoxy resin with at least one ethylenically unsaturated acid monomer or grafting the advanced epoxy resin with at least one ethylenically unsaturated acid monomer and at least one nonionic ethylenically unsaturated monomer; and (c) at least partially neutralizing the reaction product of steps (a) and (b) with a base.

**9.** The advanced epoxy resin of as claimed in any one of the preceding claims, wherein

i) the advanced epoxy resin composition has a weight average molecular weight of 300 to 1,000,000 g/mol as determined by gel permeation chromatography based on polystyrene standards; and/or
ii) the advanced epoxy resin has a glass transition temperature of 0 to 150 °C.

**10.** A method of making the advanced epoxy resin of as claimed in any one of the preceding claims comprising reacting the epoxy resin comprising the diglycidyl ether of Formula 1

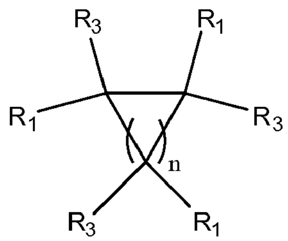

1

wherein n is 1, 2, or 3; each $R_1$ is independently hydrogen, $C_{1-12}$ alkyl, $C_{3-12}$ cycloalkyl, or $C_{6-24}$ aryl; and each $R_3$ is independently hydrogen, $C_{1-12}$ alkyl, $C_{3-12}$ cycloalkyl, $C_{6-24}$ aryl, or a glycidyl ether group, with the proviso that the diglycidyl ether has two glycidyl ether groups, with at least one difunctional compound selected from an aromatic diol and a dicarboxylic acid.

**11.** A curable advanced epoxy resin composition comprising:

the advanced epoxy resin as claimed in any one of claims 1-9;
a curing agent, e.g. a phenol-formaldehyde resin; and
optionally a curing catalyst.

**12.** A method of curing a curable advanced epoxy resin composition comprising reacting the advanced epoxy resin as claimed in any one of claims 1-9 with a curing agent e.g. a phenol-formaldehyde resin, and optionally a curing catalyst.

**13.** A cured advanced epoxy resin composition comprising a reaction product of the advanced epoxy resin as claimed in any one of claims 1-9 and a curing agent.

**14.** The cured advanced epoxy resin composition of Claim 20, wherein the composition is in the form of a can coating or a general protective/maintenance coating; and wherein the composition preferably has one or more of:

a failure rate of less than or equal to 5%, as measured by the wedge bend flexibility test;
a solvent resistance of greater than or equal to 25 MEK double rubs;
a Konig hardness of 100 to 250, measured according to ASTM D 4366;
a crosshatch adhesion of 4B to 5B, measured according to ASTM D 3359; and
a pencil hardness ofB or higher, measured according to ASTM D 3363.

**15.** An article comprising the cured advanced epoxy resin composition of Claim 13, wherein the article is preferably a coating, an adhesive, an electrical or structural laminate, an electrical or structural composite, a filament winding, a molding, a casting, a potting, or an encapsulation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 17911 A
- US 6306934 B
- WO 2000039190 A
- WO 2005080517 A


### Non-patent literature cited in the description


- **L. R. WHITTINGTON.** Whittington's Dictionary of Plastics. 1968, 239
- **JAY, R.R.** Direct Titration of Epoxy Compounds and Aziridines. *Analytical Chemistry,* March 1964, vol. 36 (3), 667-668
- **GEORGE ODIAN.** Principles of Polymerization